# EUROPEAN PATENT APPLICATION

(11) **EP 4 340 162 A1**
(43) Date of publication of application: **20.03.2024**
(21) Application number: 22807077.7
(22) Date of filing: 25.02.2022
(51) Int. Cl.: H02J 7/00, A24F 40/40, A24F 40/53

(54) **POWER SUPPLY UNIT FOR AEROSOL GENERATION DEVICE**

(30) Priority: 10.05.2021 JP 2021079903
(71) Applicant: JAPAN TOBACCO INC., Minato-ku Tokyo 105-6927 (JP)
(72) Inventor: YAMADA, Manabu, Tokyo 130-8603 (JP); AOYAMA, Tatsunari, Tokyo 130-8603 (JP); KAWANAGO, Hiroshi, Tokyo 130-8603 (JP); NAKAAE, Hiroki, Tokyo 130-8603 (JP); NAGAHAMA, Toru, Tokyo 130-8603 (JP); NISHIMURA, Yuki, Tokyo 130-8603 (JP); FUJIKI, Takashi, Tokyo 130-8603 (JP); MASUDA, Yuki, Tokyo 130-8603 (JP); YOSHIDA, Ryo, Tokyo 130-8603 (JP)
(74) Representative: Hoffmann Eitle
(86) International application number: PCT/JP2022/007905
(87) International publication number: WO 2022/239370

(57) **Abstract**

Provided is an aerosol generation device having improved safety. An aspirator (100) is provided with: a heater connector Cn to which a heater HTR for heating a rod (500) by consuming power supplied from a power supply BAT is connected; a case (110); and, a thermistor T4, disposed near the case (110), for outputting a value that pertains to the temperature of the case (110). Performed is protection control for prohibiting, on the basis of the output value of the thermistor T4, charging of the power supply BAT and discharging from the power supply BAT to the heater HTR.

## Description

### TECHNICAL FIELD

The present invention relates to a power supply unit for an aerosol generating device.

### BACKGROUND ART

Patent Literature 1 discloses a device including an aerosol generating device which includes a battery and an aerosol generation element, and a portable charger. In this device, the portable charger includes a thermistor for detecting a temperature of a housing of the aerosol generating device, and when the temperature detected by the thermistor falls below 10°C, a coil around the battery of the aerosol generating device is operated to prevent a temperature of the battery from falling to 10° C.

Patent Literature 2 discloses a device for protection from overcurrent and overvoltage using a comparator.

### CITATION LIST

### PATENT LITERATURE

Patent Literature 1: JP2019-525737A
Patent Literature 2: US Patent Application Publication No. 2020/0000146

### SUMMARY OF INVENTION

### TECHNICAL PROBLEM

In the aerosol generating device configured to inhale aerosol, components which generates heat such as a power supply and a heater, and electronic components for control are provided in a housing of the aerosol generating device. It is important to prevent such components from generating heat in a high-temperature environment in order to enhance safety.

An object of the present invention is to provide an aerosol generating device with enhanced safety.

### SOLUTION TO PROBLEM

A power supply unit for an aerosol generating device according to an aspect of the present invention includes: a power supply, a heater connector connected to a heater configured to heat an aerosol source by consuming power supplied from the power supply, a case which constitutes a surface of the power supply unit, and a sensor which is disposed in the vicinity of the case and is configured to output a value related to a temperature of the case, in which protection control for prohibiting one or both of charging of the power supply and discharging from the power supply to the heater is executed based on an output value of the sensor.

### ADVANTAGEOUS EFFECTS OF INVENTION

According to the present invention, an aerosol generating device with enhanced safety can be provided.

### BRIEF DESCRIPTION OF DRAWINGS

[Fig. 1] Fig. 1 is a perspective view of a non-combustion inhaler.
[Fig. 2] Fig. 2 is a perspective view of the non-combustion inhaler illustrating a state where a rod is mounted.
[Fig. 3] Fig. 3 is another perspective view of the non-combustion inhaler.
[Fig. 4] Fig. 4 is an exploded perspective view of the non-combustion inhaler.
[Fig. 5] Fig. 5 is a perspective view of an internal unit of the non-combustion inhaler.
[Fig. 6] Fig. 6 is an exploded perspective view of the internal unit in Fig. 5.
[Fig. 7] Fig. 7 is a perspective view of the internal unit with a power supply and a chassis removed.
[Fig. 8] Fig. 8 is another perspective view of the internal unit with the power supply and the chassis removed.
[Fig. 9] Fig. 9 is a schematic diagram for illustrating operation modes of the inhaler.
[Fig. 10] Fig. 10 is a diagram illustrating a schematic configuration of an electric circuit of the internal unit.
[Fig. 11] Fig. 11 is a diagram illustrating a schematic configuration of the electric circuit of the internal unit.
[Fig. 12] Fig. 12 is a diagram illustrating a schematic configuration of the electric circuit of the internal unit.
[Fig. 13] Fig. 13 is a diagram for illustrating an operation of the electric circuit in a sleep mode.
[Fig. 14] Fig. 14 is a diagram for illustrating an operation of the electric circuit in an active mode.
[Fig. 15] Fig. 15 is a diagram for illustrating an operation of the electric circuit in a heating initial setting mode.
[Fig. 16] Fig. 16 is a diagram for illustrating an operation of the electric circuit at the time of heating the heater in a heating mode.
[Fig. 17] Fig. 17 is a diagram for illustrating an operation of the electric circuit at the time of detecting a temperature of the heater in the heating mode.
[Fig. 18] Fig. 18 is a diagram for illustrating an operation of the electric circuit in a charging mode.
[Fig. 19] Fig. 19 is a diagram for illustrating an operation of the electric circuit at the time of resetting (restarting) an MCU.
[Fig. 20] Fig. 20 is a schematic diagram for illustrating a detection process of an inhaling operation by the MCU using a puff thermistor.
[Fig. 21] Fig. 21 is a circuit diagram of essential parts illustrating main electronic components related to a thermistor, of the electric circuit illustrated in Fig. 10.
[Fig. 22] Fig. 22 is a diagram illustrating an extracted portion of a range AR surrounded by a broken line in Fig. 21.
[Fig. 23] Fig. 23 is a diagram illustrating a specific example of a pattern of protection control executed by the inhaler.
[Fig. 24] Fig. 24 is a flowchart illustrating an example of operations of a remaining amount meter IC and the MCU when a high-temperature notification signal is output from the remaining amount meter IC in a state of the sleep mode.
[Fig. 25] Fig. 25 is a sectional view taken along a section passing through a case thermistor T4 of the inhaler illustrated in Fig. 1.
[Fig. 26] Fig. 26 is a sectional view taken along a section passing through the case thermistor T4 of the inhaler illustrated in Fig. 1.

### DESCRIPTION OF EMBODIMENTS

Hereinafter, an inhaling system as an embodiment of an aerosol generating device according to the present invention will be described with reference to the drawings. The inhaling system includes a non-combustion inhaler 100 (hereinafter, also simply referred to as "inhaler 100") which is an embodiment of a power supply unit according to the present invention, and a rod 500 heated by the inhaler 100. In the following description, a configuration in which the inhaler 100 accommodates a heating unit in an undetachable manner will be described as an example. However, the heating unit may be attachable to and detachable from the inhaler 100. For example, the rod 500 and the heating unit may be integrated and attachable to and detachable from the inhaler 100. That is, the power supply unit for the aerosol generating device may not include the heating unit as a component. The term "undetachable" refers to an aspect in which detachment cannot be performed as long as in an assumed application. Alternatively, an induction heating coil provided in the inhaler 100 and a susceptor built in the rod 500 may cooperate to constitute the heating unit.

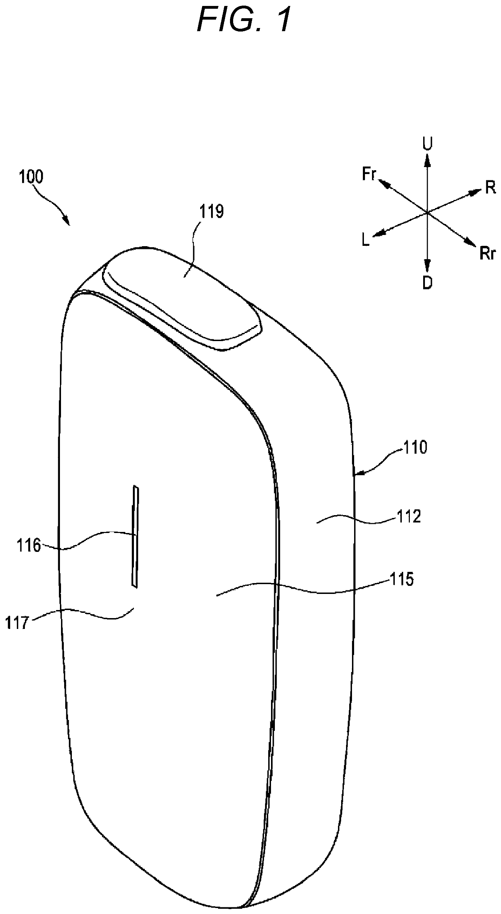

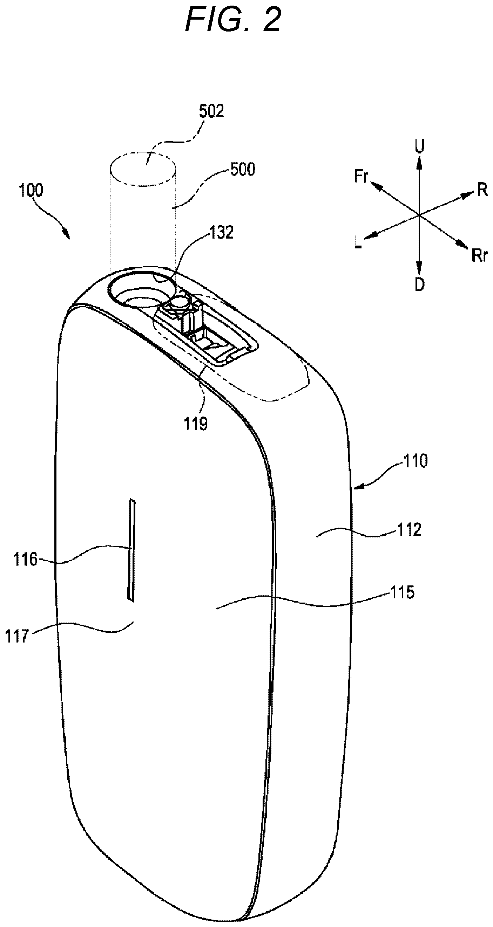

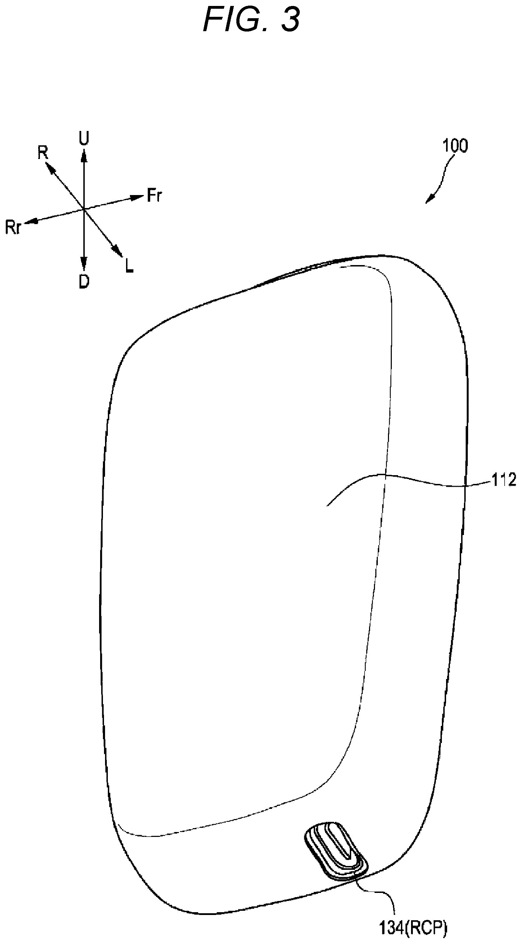

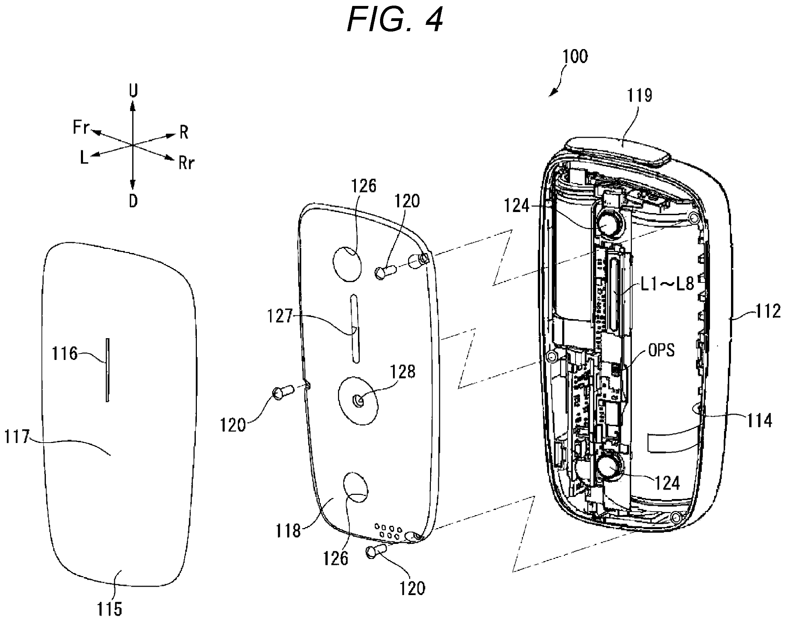

Fig. 1 is a perspective view illustrating an overall configuration of the inhaler 100. Fig. 2 is a perspective view of the inhaler 100 illustrating a state where the rod 500 is mounted. Fig. 3 is another perspective view of the inhaler 100. Fig. 4 is an exploded perspective view of the inhaler 100. In addition, in the following description, for convenience, an orthogonal coordinate system in a three-dimensional space in which three directions orthogonal to one another are defined as a front-rear direction, a left-right direction, and an up-down direction will be described. In the drawings, a front side is denoted by Fr, a rear side is denoted by Rr, a right side is denoted by R, a left side is denoted by L, an upper side is denoted by U, and a lower side is denoted by D.

The inhaler 100 is configured to generate an aerosol containing a flavor by heating the rod 500 which is elongated and substantially columnar (see Fig. 2) as an example of a flavor component generation base material having a filler containing an aerosol source and a flavor source.

### <Flavor Component Generation Base Material (Rod)>

The rod 500 includes a filler containing an aerosol source which is heated at a predetermined temperature to generate aerosol.

The type of the aerosol source is not particularly limited, and an extract substance from various natural products and/or a constituent component thereof can be selected according to a purpose. The aerosol source may be a solid, or may be a liquid such as a polyhydric alcohol, which is, for example, glycerin or propylene glycol, and water. The aerosol source may contain a flavor source such as a cigarette raw material which releases a flavor component by being heated or an extract derived from the cigarette raw material. The gas to which the flavor component is added is not limited to the aerosol, and for example, invisible steam may be generated.

The filler of the rod 500 may contain cut tobacco as the flavor source. A material of the cut tobacco is not particularly limited, and known materials such as a lamina and a midrib can be used. The filler may contain one type or two or more types of fragrances. A type of the fragrance is not particularly limited, but is preferably menthol from the viewpoint of imparting good taste. The flavor source may contain a plant other than tobacco (for example, mint, kampo, hearb, or the like). The rod 500 may not contain a flavor source depending on the purpose.

### <Overall Configuration of Non-combustion Inhaler>

Next, the overall configuration of the inhaler 100 will be described with reference to Figs. 1 to 4.

The inhaler 100 includes a substantially rectangular case 110 having a front surface, a rear surface, a left surface, a right surface, an upper surface, and a lower surface. The case 110 includes a bottomed tubular case main body 112 in which the front surface, the rear surface, the upper surface, the lower surface, and the right surface are integrally formed, an outer panel 115 and an inner panel 118 which seal an opening portion 114 (see Fig. 4) of the case main body 112 and constitute the left surface, and a slider 119.

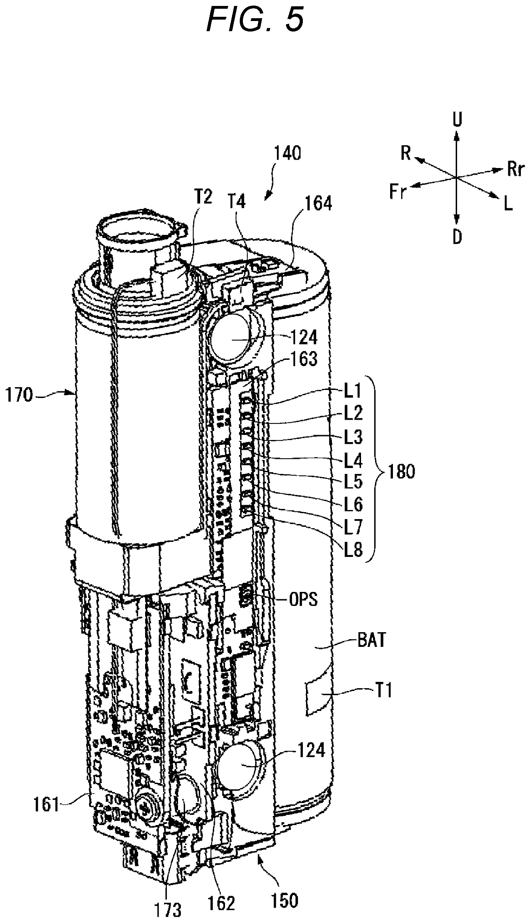

The inner panel 118 is fixed to the case main body 112 by bolts 120. The outer panel 115 is fixed to the case main body 112 by magnets 124 held by a chassis 150 (see Fig. 5) to be described later accommodated in the case main body 112, so as to cover an outer surface of the inner panel 118. The outer panel 115 is fixed by the magnets 124, so that a user may replace the outer panel 115 as desired.

The inner panel 118 is provided with two through holes 126 through which the magnets 124 pass. The inner panel 118 is further provided with a vertically long hole 127 and a circular round hole 128 between the two through holes 126 disposed vertically. The long hole 127 is used to transmit light emitted from eight light emitting diodes (LEDs) L1 to L8 built in the case main body 112. A button-type operation switch OPS built in the case main body 112 passes through the round hole 128. Accordingly, the user can detect the light emitted from the eight LEDs L1 to L8 through a LED window 116 of the outer panel 115. In addition, the user can press down the operation switch OPS via a pressing portion 117 of the outer panel 115.

As illustrated in Fig. 2, an opening 132 into which the rod 500 may be inserted is provided in the upper surface of the case main body 112. The slider 119 is coupled to the case main body 112 between a position where the opening 132 is closed (see Fig. 1) and a position where the opening 132 is opened (see Fig. 2), so as to be movable in the front-rear direction.

The operation switch OPS is used to perform various operations of the inhaler 100. For example, the user operates the operation switch OPS via the pressing portion 117 in a state where the rod 500 is inserted into the opening 132 and mounted as illustrated in Fig. 2. Accordingly, the rod 500 is heated by the heating unit 170 (see Fig. 5) without combustion. When the rod 500 is heated, aerosol is generated from the aerosol source contained in the rod 500, and the flavor of the flavor source contained in the rod 500 is added to the aerosol. The user can inhale the aerosol containing the flavor by holding in the mouth an inhaling port 502 of the rod 500 protruding from the opening 132 to perform inhaling.

As illustrated in Fig. 3, a charging terminal 134 which is electrically connected to an external power supply such as an outlet or a mobile battery and receives supply of power is provided on the lower surface of the case main body 112. In the present embodiment, the charging terminal 134 is a universal serial bus (USB) Type-C receptacle, but is not limited thereto. The charging terminal 134 is hereinafter also referred to as a receptacle RCP.

The charging terminal 134 may include, for example, a power receiving coil, and may receive power transmitted from the external power supply in a non-contact manner. A method of wireless power transfer in this case may be an electromagnetic induction type, a magnetic resonance type, or a combination of the electromagnetic induction type and the magnetic resonance type. As another example, the charging terminal 134 may be connectable to various USB terminals or the like, and may include the above-described power receiving coil.

A configuration of the inhaler 100 illustrated in Figs. 1 to 4 is merely an example. The inhaler 100 can be configured in various forms in which the rod 500 is held and applied with an action such as heating to generate a gas to which a flavor component is added from the rod 500, and a user can inhale the generated gas.

### <Internal Configuration of Non-combustion Inhaler>

An internal unit 140 of the inhaler 100 will be described with reference to Figs. 5 to 8.

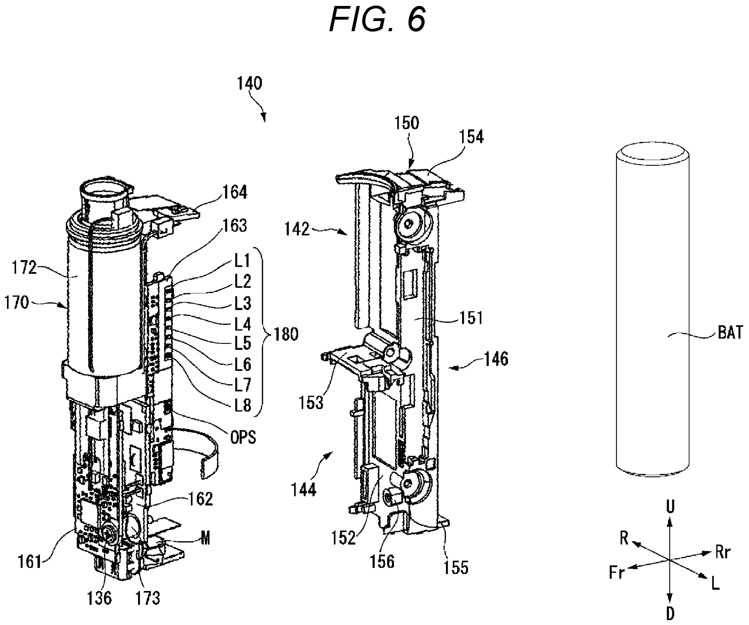

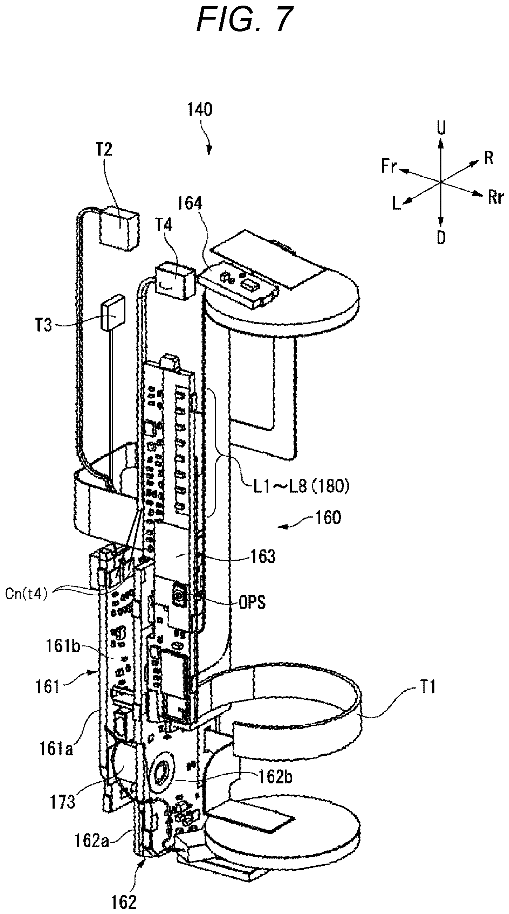

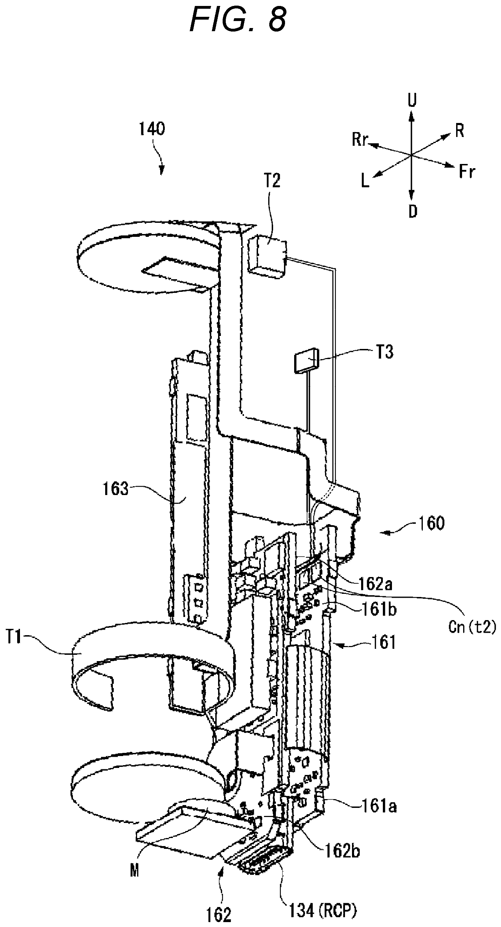

Fig. 5 is a perspective view of the internal unit 140 of the inhaler 100. Fig. 6 is an exploded perspective view of the internal unit 140 in Fig. 5. Fig. 7 is a perspective view of the internal unit 140 from which a power supply BAT and the chassis 150 are removed. Fig. 8 is another perspective view of the internal unit 140 from which the power supply BAT and the chassis 150 are removed.

The internal unit 140 accommodated in an internal space of the case 110 includes the chassis 150, the power supply BAT, a circuit unit 160, a heating unit 170, a notification unit 180, and various sensors.

The chassis 150 includes a plate-shaped chassis main body 151 which is disposed substantially in a center of the internal space of the case 110 in the front-rear direction and which extends in the up-down direction and the front-rear direction, a plate-shaped front-rear dividing wall 152 which is disposed substantially in the center of the internal space of the case 110 in the front-rear direction and which extends in the up-down direction and the left-right direction, a plate-shaped up-down dividing wall 153 which extends forward from substantially a center of the front-rear dividing wall 152 in the up-down direction, a plate-shaped chassis upper wall 154 which extends rearward from upper edge portions of the front-rear dividing wall 152 and the chassis main body 151, and a plate-shaped chassis lower wall 155 which extends rearward from lower edge portions of the front-rear dividing wall 152 and the chassis main body 151. A left surface of the chassis main body 151 is covered with the inner panel 118 and the outer panel 115 of the case 110 described above.

By the chassis 150, a heating unit accommodation region 142 is defined and formed in an upper front portion of the internal space of the case 110, a board accommodation region 144 is defined and formed in a lower front portion thereof, and a power supply accommodation space 146 is defined and formed in a rear portion thereof over the up-down direction.

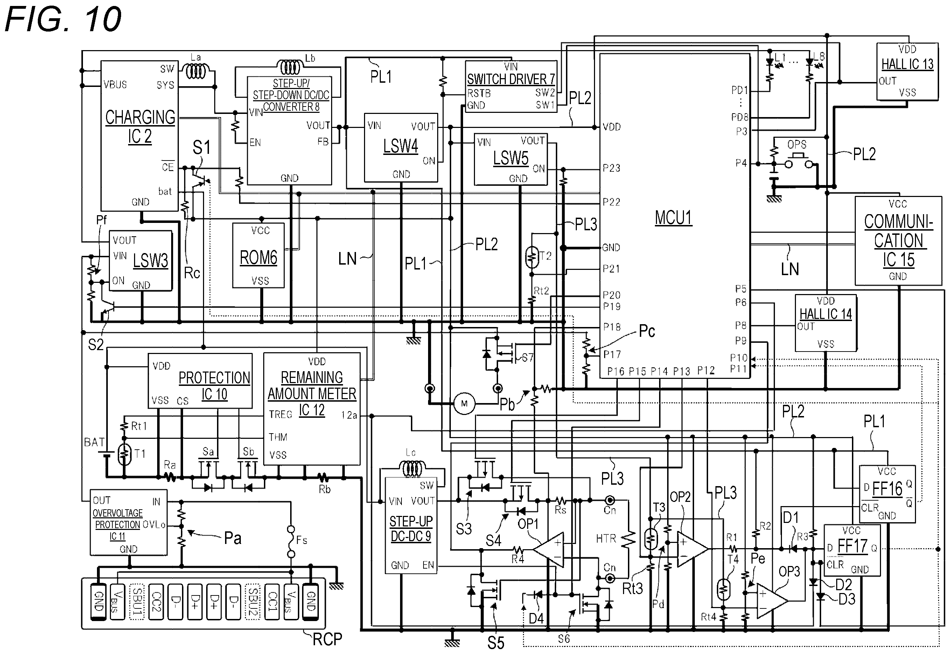

The heating unit 170 accommodated in the heating unit accommodation region 142 is constituted by a plurality of tubular members, and the tubular members are concentrically disposed to form a tubular body as a whole. The heating unit 170 includes a rod accommodation portion 172 capable of accommodating a part of the rod 500 therein, and a heater HTR (see Figs. 10 to 19) which heats the rod 500 from an outer periphery or a center It is preferable that a surface of the rod accommodation portion 172 and the heater HTR are thermally insulated by forming the rod accommodation portion 172 with a heat insulating material or providing a heat insulating material inside the rod accommodation portion 172. The heater HTR may be an element capable of heating the rod 500. The heater HTR is, for example, a heating element. Examples of the heating element include a heating resistor, a ceramic heater, and an induction-heating-type heater. As the heater HTR, for example, a heater having a positive temperature coefficient (PTC) characteristic in which a resistance value increases with an increase in temperature is preferably used. Alternatively, a heater HTR having a negative temperature coefficient (NTC) characteristic in which the resistance value decreases with an increase in temperature may be used. The heating unit 170 has a function of defining a flow path of air supplied to the rod 500 and a function of heating the rod 500. The case 110 is formed with a vent hole (not illustrated) for allowing air to flow in so that air can flow into the heating unit 170.

The power supply BAT accommodated in the power supply accommodation space 146 is a rechargeable secondary battery, an electric double layer capacitor, or the like, and is preferably a lithium ion secondary battery. An electrolyte of the power supply BAT may be constituted by one or a combination of a gel electrolyte, an electrolytic solution, a solid electrolyte, and an ionic liquid.

The notification unit 180 notifies various types of information such as a state of charge (SOC) indicating a charging state of the power supply BAT, a preheating time at the time of inhaling, and an inhaling available period. The notification unit 180 according to the present embodiment includes the eight LEDs L1 to L8 and a vibration motor M. The notification unit 180 may be constituted by a light emitting element such as the LEDs L1 to L8, a vibration element such as the vibration motor M, or a sound output element. The notification unit 180 may be a combination of two or more elements among a light emitting element, a vibration element, and a sound output element.

The various sensors include an intake sensor which detects a puff operation (inhaling operation) of the user, a power supply temperature sensor which detects a temperature of the power supply BAT, a heater temperature sensor which detects a temperature of the heater HTR, a case temperature sensor which detects a temperature of the case 110, a cover position sensor which detects a position of the slider 119, a panel detection sensor which detects attachment and detachment of the outer panel 115, and the like.

The intake sensor mainly includes, for example, a thermistor T2 disposed in the vicinity of the opening 132. The power supply temperature sensor mainly includes, for example, a thermistor T1 disposed in the vicinity of the power supply BAT. The heater temperature sensor mainly includes, for example, a thermistor T3 disposed in the vicinity of the heater HTR. As described above, the rod accommodation portion 172 is preferably thermally insulated from the heater HTR. In this case, the thermistor T3 is preferably in contact with or close to the heater HTR inside the rod accommodation portion 172. When the heater HTR has the PTC characteristic or the NTC characteristic, the heater HTR may be used for the heater temperature sensor. The case temperature sensor mainly includes, for example, a thermistor T4 disposed in the vicinity of the left surface of the case 110. The thermistor T4 is preferably in contact with or close to the case 110. The cover position sensor mainly includes a Hall IC 14 including a Hall element disposed in the vicinity of the slider 119. The panel detection sensor mainly includes a Hall IC 13 including a Hall element disposed in the vicinity of an inner surface of the inner panel 118.

The circuit unit 160 includes four circuit boards, a plurality of integrate circuits (ICs), and a plurality of elements. The four circuit boards include an MCU-mounted board 161 to be described later on which a micro controller unit (MCU) 1 and a charging IC 2 are mainly disposed, a receptacle-mounted board 162 on which the charging terminal 134 is mainly disposed, an LED-mounted board 163 on which the operation switch OPS, the LEDs L1 to L8, and a communication IC 15 to be described later are disposed, and a Hall IC-mounted board 164 on which the Hall IC 14 to be described later including a Hall element constituting the cover position sensor is disposed.

The MCU-mounted board 161 and the receptacle-mounted board 162 are disposed in parallel with each other in the board accommodation region 144. Specifically, the MCU-mounted board 161 and the receptacle-mounted board 162 are disposed such that element disposition surfaces thereof extend in the left-right direction and the up-down direction, and the MCU-mounted board 161 is disposed in front of the receptacle-mounted board 162. Each of the MCU-mounted board 161 and the receptacle-mounted board 162 is provided with an opening portion. The MCU-mounted board 161 and the receptacle-mounted board 162 are fastened, by a bolt 136, to a board fixing portion 156 of the front-rear dividing wall 152 in a state where a cylindrical spacer 173 is interposed between peripheral portions of the respective opening portions. That is, the spacer 173 fixes positions of the MCU-mounted board 161 and the receptacle-mounted board 162 inside the case 110, and mechanically connects the MCU-mounted board 161 and the receptacle-mounted board 162. Accordingly, the MCU-mounted board 161 and the receptacle-mounted board 162 come into contact with each other, and it is possible to prevent the occurrence of a short-circuit current therebetween.

For convenience, assuming that the surfaces of the MCU-mounted board 161 and the receptacle-mounted board 162 facing the front are main surfaces 161a and 162a, respectively, and surfaces opposite to the main surfaces 161a and 162a are secondary surfaces 161b and 162b, respectively, the secondary surface 161b of the MCU-mounted board 161 and the main surface 162a of the receptacle-mounted board 162 face each other with a predetermined gap therebetween. The main surface 161a of the MCU-mounted board 161 faces the front surface of the case 110, and the secondary surface 162b of the receptacle-mounted board 162 faces the front-rear dividing wall 152 of the chassis 150. Elements and ICs mounted on the MCU-mounted board 161 and the receptacle-mounted board 162 will be described later.

The LED-mounted board 163 is disposed on a left side surface of the chassis main body 151 and between the two magnets 124 disposed vertically. An element disposition surface of the LED-mounted board 163 is disposed along the up-down direction and the front-rear direction. In other words, element disposition surfaces of the MCU-mounted board 161 and the receptacle-mounted board 162 are orthogonal to the element disposition surface of the LED-mounted board 163. In this way, the element disposition surfaces of the MCU-mounted board 161 and the receptacle-mounted board 162 and the element disposition surface of the LED-mounted board 163 are not limited to being orthogonal to one another, and preferably intersect with one another (not parallel with one another). The vibration motor M constituting the notification unit 180 together with the LEDs L1 to L8 is fixed to a lower surface of the chassis lower wall 155 and is electrically connected to the MCU-mounted board 161.

The Hall IC-mounted board 164 is disposed on the upper surface of the chassis upper wall 154.

### <Operation Modes of Inhaler>

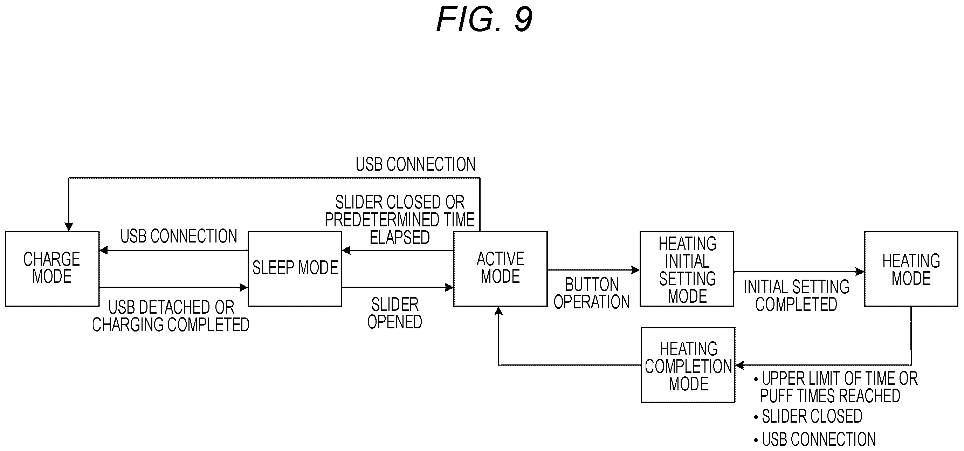

Fig. 9 is a schematic diagram for illustrating operation modes of the inhaler 100. As illustrated in Fig. 9, the operation modes of the inhaler 100 include a charging mode, a sleep mode, an active mode, a heating initial setting mode, a heating mode, and a heating completion mode.

The sleep mode is a mode in which supply of power to electronic components mainly required for heating control of the heater HTR is stopped to save power.

The active mode is a mode in which most of the functions excluding the heating control of the heater HTR are enabled. The inhaler 100 switches the operation mode to the active mode when the slider 119 is opened in a state of operating in the sleep mode. The inhaler 100 switches the operation mode to the sleep mode when the slider 119 is closed or a non-operation time of the operation switch OPS reaches a predetermined time in a state of operating in the active mode.

The heating initial setting mode is a mode for performing initial setting of control parameters and the like for starting the heating control of the heater HTR. The inhaler 100 switches the operation mode to the heating initial setting mode when the operation of the operation switch OPS is detected in a state of operating in the active mode, and switches the operation mode to the heating mode when the initial setting is completed.

The heating mode is a mode in which the heating control of the heater HTR (heating control for aerosol generation and heating control for temperature detection) is executed. The inhaler 100 starts the heating control of the heater HTR when the operation mode is switched to the heating mode.

The heating completion mode is a mode in which a completion process (storage process of heating history or the like) of the heating control of the heater HTR is executed. The inhaler 100 switches the operation mode to the heating completion mode when an energization time to the heater HTR or the number of times of inhaling by the user reaches an upper limit or the slider 119 is closed in a state of operating in the heating mode, and switches the operation mode to the active mode when the completion process is completed. The inhaler 100 switches the operation mode to the heating completion mode when a USB connection is established in a state of operating in the heating mode, and switches the operation mode to the charging mode when the completion process is completed. As illustrated in Fig. 9, in this case, the operation mode may be switched to the active mode before the operation mode is switched to the charging mode. In other words, the inhaler 100 may switch the operation mode in the order of the heating completion mode, the active mode, and the charging mode when the USB connection is established in a state of operating in the heating mode.

The charging mode is a mode in which the power supply BAT is charged by power supplied from the external power supply connected to the receptacle RCP. The inhaler 100 switches the operation mode to the charging mode when an external power supply is connected (USB connected) to the receptacle RCP in a state of operating in the sleep mode or the active mode. The inhaler 100 switches the operation mode to the sleep mode when the charging of the power supply BAT is completed or the connection between the receptacle RCP and the external power supply is released in a state of operating in the charging mode.

### <Outline of Circuit of Internal Unit>

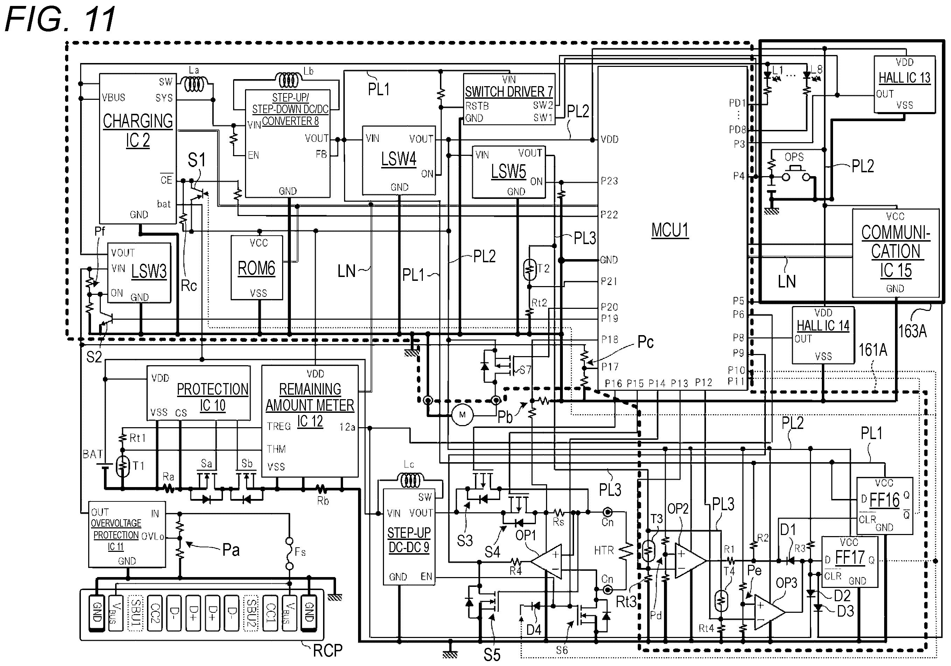

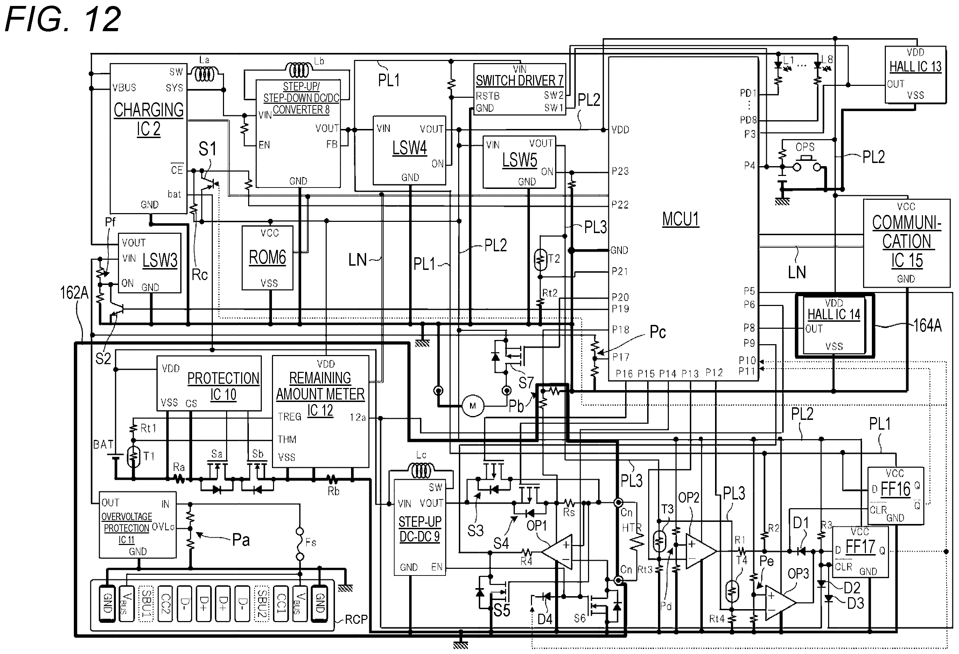

Figs. 10, 11, and 12 are diagrams illustrating a schematic configuration of an electric circuit of the internal unit 140. Fig. 11 is the same as Fig. 10 except that a range 161A (range surrounded by a thick broken line) mounted on the MCU-mounted board 161 and a range 163A (range surrounded by a thick solid line) mounted on the LED-mounted board 163 are added in the electric circuit illustrated in Fig. 10. Fig. 12 is the same as Fig. 10 except that a range 162A mounted on the receptacle-mounted board 162 and a range 164A mounted on the Hall IC-mounted board 164 are added in the electric circuit illustrated in Fig. 10.

A wiring indicated by a thick solid line in Fig. 10 is a wiring having the same potential as a reference potential (ground potential) of the internal unit 140 (wiring connected to a ground provided in the internal unit 140), and this wiring is hereinafter referred to as a ground line. In Fig. 10, an electronic component in which a plurality of circuit elements are formed into a chip is indicated by a rectangle, and reference numerals of various terminals are described inside the rectangle. A power supply terminal VCC and a power supply terminal VDD mounted on the chip each indicate a power supply terminal on a high potential side. A power supply terminal VSS and a ground terminal GND mounted on the chip each indicate a power supply terminal on a low potential side (reference potential side). In the electronic component formed into a chip, a difference between a potential of the power supply terminal on the high potential side and a potential of the power supply terminal on the low potential side becomes a power supply voltage. The electronic component formed into a chip executes various functions using the power supply voltage.

As illustrated in Fig. 11, the MCU-mounted board 161 (range 161A) is provided with, as main electronic components, the MCU 1 which performs overall control of the inhaler 100, the charging IC 2 which performs charging control of the power supply BAT, load switches (hereinafter, LSW) 3, 4, and 5 configured by combining a capacitor, a resistor, a transistor, and the like, a read only memory (ROM) 6, a switch driver 7, a step-up/step-down DC/DC converter 8 (described as step-up/step-down DC/DC 8 in the drawing), an operational amplifier OP2, an operational amplifier OP3, flip-flops (hereinafter, FF) 16 and 17, a connector Cn (t2) electrically connected to the thermistor T2 constituting the intake sensor (described as the thermistor T2 connected to the connector in the drawing), a connector Cn (t3) electrically connected to the thermistor T3 constituting the heater temperature sensor (described as the thermistor T3 connected to the connector in the drawing), a connector Cn (t4) electrically connected to the thermistor T4 constituting the case temperature sensor (described as the thermistor T4 connected to the connector in the drawing), and a voltage divider circuit Pc for USB connection detection.

The ground terminal GND of each of the charging IC 2, LSW 3, LSW 4, LSW 5, the switch driver 7, the step-up/step-down DC/DC converter 8, the FF 16, and the FF 17 is connected to the ground line. The power supply terminal VSS of the ROM 6 is connected to the ground line. Negative power supply terminals of the operational amplifiers OP2 and the operational amplifier OP3 are connected to the ground line.

As illustrated in Fig. 11, the LED-mounted board 163 (range 163A) is provided with, as main electronic components, the Hall IC 13 including the Hall element constituting the panel detection sensor, the LEDs L1 to L8, the operation switch OPS, and the communication IC 15. The communication IC 15 is a communication module for communicating with an electronic device such as a smartphone. Each of the power supply terminal VSS of the Hall IC 13 and the ground terminal GND of the communication IC 15 is connected to the ground line. The communication IC 15 and the MCU 1 can communicate with each other via a communication line LN. One end of the operation switch OPS is connected to the ground line, and the other end of the operation switch OPS is connected to a terminal P4 of the MCU 1.

As illustrated in Fig. 12, the receptacle-mounted board 162 (range 162A) is provided with, as main electronic components, a power supply connector electrically connected to the power supply BAT (described as the power supply BAT connected to the power supply connector in the drawing), a connector electrically connected to the thermistor T1 constituting the power supply temperature sensor (described as the thermistor T1 connected to the connector in the drawing), the step-up DC/DC converter 9 (described as the step-up DC/DC 9 in the drawing), a protection IC 10, an overvoltage protection IC 11, a remaining amount meter IC 12, the receptacle RCP, the switch S3 to the switch S6 each constituted by a MOSFET, the operational amplifier OP1, and a pair of heater connectors Cn (positive electrode side and negative electrode side) electrically connected to the heater HTR.

The two ground terminals GND of the receptacle RCP, the ground terminal GND of the step-up DC/DC converter 9, the power supply terminal VSS of the protection IC 10, the power supply terminal VSS of the remaining amount meter IC 12, the ground terminal GND of the overvoltage protection IC 11, and the negative power supply terminal of the operational amplifier OP1 are each connected to the ground line.

As illustrated in Fig. 12, the Hall IC-mounted board 164 (range 164A) is provided with the Hall IC 14 including the Hall element constituting the cover position sensor. The power supply terminal VSS of the Hall IC 14 is connected to the ground line. An output terminal OUT of the Hall IC 14 is connected to a terminal P8 of the MCU 1. The MCU 1 detects opening and closing of the slider 119 based on a signal input to the terminal P8.

As illustrated in Fig. 11, a connector electrically connected to the vibration motor M is provided on the MCU-mounted board 161.

### <Details of Circuit of Internal Unit>

A connection relation among the electronic components will be described below with reference to Fig. 10.

Two power supply input terminals V_{BUS} of the receptacle RCP are each connected to an input terminal IN of the overvoltage protection IC 11 via a fuse Fs. When a USB plug is connected to the receptacle RCP and a USB cable including the USB plug is connected to an external power supply, a USB voltage V_{USB} is supplied to the two power supply input terminals V_{BUS} of the receptacle RCP.

One end of a voltage divider circuit Pa including a series circuit of two resistors is connected to the input terminal IN of the overvoltage protection IC 11. The other end of the voltage divider circuit Pa is connected to the ground line. A connection point of the two resistors constituting the voltage divider circuit Pa is connected to a voltage detection terminal OVLo of the overvoltage protection IC 11. In a state where a voltage input to the voltage detection terminal OVLo is less than a threshold, the overvoltage protection IC 11 outputs the voltage input to the input terminal IN from the output terminal OUT. When the voltage input to the voltage detection terminal OVLo is equal to or higher than a threshold (overvoltage), the overvoltage protection IC 11 stops the voltage output from the output terminal OUT (cuts off an electrical connection between the LSW 3 and the receptacle RCP) to protect the electronic components downstream of the overvoltage protection IC 11. The output terminal OUT of the overvoltage protection IC 11 is connected to an input terminal VIN of the LSW 3 and one end of the voltage divider circuit Pc (series circuit of two resistors) connected to the MCU 1. The other end of the voltage divider circuit Pc is connected to the ground line. A connection point of the two resistors constituting the voltage divider circuit Pc is connected to a terminal P17 of the MCU 1.

One end of a voltage divider circuit Pf including a series circuit of two resistors is connected to the input terminal VIN of the LSW 3. The other end of the voltage divider circuit Pf is connected to the ground line. A connection point of the two resistors constituting the voltage divider circuit Pf is connected to a control terminal ON of the LSW 3. A collector terminal of a bipolar transistor S2 is connected to the control terminal ON of the LSW 3. An emitter terminal of the bipolar transistor S2 is connected to the ground line. A base terminal of the bipolar transistor S2 is connected to a terminal P19 of the MCU 1. The LSW 3 outputs a voltage input to the input terminal VlN from an output terminal VOUT when a signal input to the control terminal ON becomes a high level. The output terminal VOUT of the LSW 3 is connected to an input terminal VBUS of the charging IC 2. The MCU 1 turns on the bipolar transistor S2 while the USB connection is not established. Accordingly, since the control terminal ON of the LSW 3 is connected to the ground line via the bipolar transistor S2, a low-level signal is input to the control terminal ON of the LSW 3.

The bipolar transistor S2 connected to the LSW 3 is turned off by the MCU 1 when the USB connection is established. By turning off the bipolar transistor S2, the USB voltage V_{USB} divided by the voltage divider circuit Pf is input to the control terminal ON of the LSW 3. Therefore, when the USB connection is established and the bipolar transistor S2 is turned off, a high-level signal is input to the control terminal ON of the LSW 3. Accordingly, the LSW 3 outputs, from the output terminal VOUT, the USB voltage V_{USB} supplied from the USB cable. Even when the USB connection is established in a state where the bipolar transistor S2 is not turned off, the control terminal ON of the LSW 3 is connected to the ground line via the bipolar transistor S2. Therefore, it should be noted that a low-level signal continues to be input to the control terminal ON of the LSW 3 unless the MCU 1 turns off the bipolar transistor S2.

A positive electrode terminal of the power supply BAT is connected to the power supply terminal VDD of the protection IC 10, an input terminal VIN of the step-up DC/DC converter 9, and a charging terminal bat of the charging IC 2. Therefore, the power supply voltage V_{BAT} of the power supply BAT is supplied to the protection IC 10, the charging IC 2, and the step-up DC/DC converter 9. A resistor Ra, a switch Sa constituted by a MOSFET, a switch Sb constituted by a MOSFET, and a resistor Rb are connected in series to a negative electrode terminal of the power supply BAT in this order. A current detection terminal CS of the protection IC 10 is connected to a connection point between the resistor Ra and the switch Sa. Each of control terminals of the switch Sa and the switch Sb is connected to the protection IC 10. Both ends of the resistor Rb are connected to the remaining amount meter IC 12.

The protection IC 10 acquires a current value flowing through the resistor Ra during charging and discharging of the power supply BAT from the voltage input to the current detection terminal CS, and when the current value becomes excessively large (overcurrent), performs opening and closing control of the switch Sa and the switch Sb to stop charging or discharging of the power supply BAT, thereby protecting the power supply BAT. More specifically, when an excessively large current value is acquired at the time of charging the power supply BAT, the protection IC 10 turns off the switch Sb to stop the charging of the power supply BAT. When an excessively large current value is acquired at the time of discharging the power supply BAT, the protection IC 10 turns off the switch Sa to stop the discharging of the power supply BAT. In addition, when a voltage value of the power supply BAT becomes abnormal based on the voltage input to the power supply terminal VDD (in a case of overcharge or overvoltage), the protection IC 10 performs opening and closing control of the switch Sa and the switch Sb to stop charging or discharging of the power supply BAT, thereby protecting the power supply BAT. More specifically, when the overcharge of the power supply BAT is detected, the protection IC 10 turns off the switch Sb to stop the charging of the power supply BAT. When the overdischarge of the power supply BAT is detected, the protection IC 10 turns off the switch Sa to stop the discharging of the power supply BAT.

A resistor Rt1 is connected to the connector which is connected to the thermistor T1 disposed in the vicinity of the power supply BAT. A series circuit of the resistor Rt1 and the thermistor T1 is connected to the ground line and a regulator terminal TREG of the remaining amount meter IC 12. A connection point between the thermistor T1 and the resistor Rt1 is connected to a thermistor terminal THM of the remaining amount meter IC 12. The thermistor T1 may be a positive temperature coefficient (PTC) thermistor whose resistance value increases as the temperature increases, or may be a negative temperature coefficient (NTC) thermistor whose resistance value decreases as the temperature increases.

The remaining amount meter IC 12 detects a current flowing through the resistor Rb and derives battery information such as a remaining capacity of the power supply BAT, a state of charge (SOC) indicating a charging state, and a state of health (SOH) indicating a health state based on the detected current value. The remaining amount meter IC 12 supplies a voltage from a built-in regulator connected to the regulator terminal TREG to a voltage divider circuit of the thermistor T1 and the resistor Rt1. The remaining amount meter IC 12 acquires a voltage divided by the voltage divider circuit from the thermistor terminal THM, and acquires temperature information related to the temperature of the power supply BAT based on the voltage. The remaining amount meter IC 12 is connected to the MCU 1 via the communication line LN for serial communication, and is configured to be able to communicate with the MCU 1. The remaining amount meter IC 12 transmits the derived battery information and the acquired temperature information of the power supply BAT to the MCU 1 in response to a request from the MCU 1. A plurality of signal lines such as a data line for data transmission and a clock line for synchronization are required to perform serial communication. It should be noted that only one signal line is illustrated in Figs. 10 to 19 for simplification.

The remaining amount meter IC 12 includes a notification terminal 12a. The notification terminal 12a is connected to a terminal P6 of the MCU 1 and a cathode of a diode D2 to be described later. When an abnormality such as an excessively high temperature of the power supply BAT is detected, the remaining amount meter IC 12 outputs a low-level signal from the notification terminal 12a to notify the MCU 1 of the occurrence of the abnormality. The low-level signal is also input to a CLR( ) terminal of the FF 17 via the diode D2.

One end of a reactor Lc is connected to a switching terminal SW of the step-up DC/DC converter 9. The other end of the reactor Lc is connected to the input terminal VIN of the step-up DC/DC converter 9. The step-up DC/DC converter 9 performs ON/OFF control of a built-in transistor connected to the switching terminal SW, thereby stepping up an input voltage and outputting the stepped-up voltage from an output terminal VOUT thereof. The input terminal VIN of the step-up DC/DC converter 9 constitutes a power supply terminal of the step-up DC/DC converter 9 on a high potential side. The step-up DC/DC converter 9 performs a step-up operation when a signal input to an enable terminal EN is at a high level. In the USB-connected state, the signal input to the enable terminal EN of the step-up DC/DC converter 9 may be controlled to a low level by the MCU 1. Alternatively, in the USB-connected state, the MCU 1 may not control the signal input to the enable terminal EN of the step-up DC/DC converter 9 to make a potential of the enable terminal EN unstable.

A source terminal of a switch S4 constituted by a P-channel MOSFET is connected to the output terminal VOUT of the step-up DC/DC converter 9. A gate terminal of the switch S4 is connected to a terminal P15 of the MCU 1. One end of a resistor Rs is connected to a drain terminal of the switch S4. The other end of the resistor Rs is connected to the heater connector Cn on the positive electrode side connected to one end of the heater HTR. A voltage divider circuit Pb including two resistors is connected to a connection point between the switch S4 and the resistor Rs. A connection point of the two resistors constituting the voltage divider circuit Pb is connected to a terminal P18 of the MCU 1. A connection point between the switch S4 and the resistor Rs is further connected to a positive power supply terminal of the operational amplifier OP1 .

A connection line between the output terminal VOUT of the step-up DC/DC converter 9 and the source terminal of the switch S4 is connected to a source terminal of the switch S3 constituted by a P-channel MOSFET. A gate terminal of the switch S3 is connected to the terminal P16 of the MCU 1. A drain terminal of the switch S3 is connected to a connection line between the resistor Rs and the heater connector Cn on the positive electrode side. In this way, a circuit including the switch S3 and a circuit including the switch S4 and the resistor Rs are connected in parallel between the output terminal VOUT of the step-up DC/DC converter 9 and the positive electrode side of the heater connector Cn. The circuit including the switch S3 does not include a resistor, and thus is a circuit having a lower resistance than the circuit including the switch S4 and the resistor Rs.

A non-inverting input terminal of the operational amplifier OP1 is connected to the connection line between the resistor Rs and the heater connector Cn on the positive electrode side. An inverting input terminal of the operational amplifier OP1 is connected to the heater connector Cn on the negative electrode side and a drain terminal of the switch S6, the heater connector Cn being connected to the other end of the heater HTR, the drain terminal of the switch S6 being constituted by an N-channel MOSFET. A source terminal of the switch S6 is connected to the ground line. A gate terminal of the switch S6 is connected to a terminal P14 of the MCU 1, an anode of the diode D4, and the enable terminal EN of the step-up DC/DC converter 9. A cathode of the diode D4 is connected to a Q terminal of the FF 17. One end of a resistor R4 is connected to an output terminal of the operational amplifier OP1. The other end of the resistor R4 is connected to a terminal P9 of the MCU 1 and a drain terminal of the switch S5 constituted by an N-channel MOSFET. A source terminal of the switch S5 is connected to the ground line. A gate terminal of the switch S5 is connected to the connection line between the resistor Rs and the heater connector Cn on the positive electrode side.

The input terminal VBUS of the charging IC 2 is connected to an anode of each of the LEDs L1 to L8. Cathodes of the LEDs L1 to L8 are connected to control terminals PD1 to PD8 of the MCU 1 via resistors for current limitation, respectively. That is, the LEDs L1 to L8 are connected in parallel with the input terminal VBUS. The LEDs L1 to L8 are configured to be able to be operated by the USB voltage V_{USB} supplied from the USB cable connected to the receptacle RCP and a voltage supplied from the power supply BAT via the charging IC 2. Transistors (switching elements) connected to the control terminal PD1 to the control terminal PD8 and the ground terminal GND are built in the MCU 1. The MCU 1 turns on the transistor connected to the control terminal PD1 to energize the LED L1 and turn on the LED L1. The MCU 1 turns off the transistor connected to the control terminal PD1 to turn off the LED L1. By switching ON and OFF of the transistor connected to the control terminal PD1 at a high speed, the luminance and the light emission pattern of the LED L1 can be dynamically controlled. Similarly, the LEDs L2 to L8 are controlled to be turned on and turned off by the MCU 1.

The charging IC 2 has a charging function of charging the power supply BAT based on the USB voltage V_{USB} input to the input terminal VBUS. The charging IC 2 acquires a charging current or a charging voltage of the power supply BAT from a terminal or wiring (not illustrated), and performs charging control of the power supply BAT (control on supply of power from the charging terminal bat to the power supply BAT) based on the acquired charging current or charging voltage. In addition, the charging IC 2 may acquire, from the MCU 1, the temperature information of the power supply BAT transmitted from the remaining amount meter IC 12 to the MCU 1 through serial communication using the communication line LN and use the temperature information for charging control.

The charging IC 2 further includes a V_{BAT} power path function and an OTG function. The V_{BAT} power path function is a function of outputting, from an output terminal SYS, a system power supply voltage Vcc0 which is substantially equal to the power supply voltage V_{BAT} input to the charging terminal bat. The OTG function is a function of outputting a system power supply voltage Vcc4 obtained by stepping up the power supply voltage V_{BAT} input to the charging terminal bat from the input terminal VBUS. ON/OFF of the OTG function of the charging IC 2 is controlled by the MCU 1 through serial communication using the communication line LN. In the OTG function, the power supply voltage V_{BAT} input to the charging terminal bat may be output as it is from the input terminal VBUS. In this case, the power supply voltage V_{BAT} is substantially equal to the system power supply voltage Vcc4.

The output terminal SYS of the charging IC 2 is connected to an input terminal VIN of the step-up/step-down DC/DC converter 8. One end of a reactor La is connected to the switching terminal SW of the charging IC 2. The other end of the reactor La is connected to the output terminal SYS of the charging IC 2. A charge enable terminal CE( ) of the charging IC 2 is connected to a terminal P22 of the MCU 1 via a resistor. Further, a collector terminal of the bipolar transistor S1 is connected to the charge enable terminal CE( ) of the charging IC 2. An emitter terminal of the bipolar transistor S1 is connected to an output terminal VOUT of the LSW 4 to be described later. A base terminal of the bipolar transistor S 1 is connected to the Q terminal of the FF 17. Further, one end of a resistor Rc is connected to the charge enable terminal CE( ) of the charging IC 2. The other end of the resistor Rc is connected to the output terminal VOUT of the LSW 4.

A resistor is connected to the input terminal VIN and an enable terminal EN of the step-up/step-down DC/DC converter 8. By inputting the system power supply voltage Vcc0 from the output terminal SYS of the charging IC 2 to the input terminal VIN of the step-up/step-down DC/DC converter 8, a signal input to the enable terminal EN of the step-up/step-down DC/DC converter 8 becomes a high level, and the step-up/step-down DC/DC converter 8 starts a step-up operation or a step-down operation. The step-up/step-down DC/DC converter 8 steps up or steps down the system power supply voltage Vcc0 input to the input terminal VIN by switching control of a built-in transistor connected to a reactor Lb to generate a system power supply voltage Vcc1, and outputs the system power supply voltage Vcc1 from the output terminal VOUT. The output terminal VOUT of the step-up/step-down DC/DC converter 8 is connected to a feedback terminal FB of the step-up/step-down DC/DC converter 8, an input terminal VIN of the LSW 4, an input terminal VIN of the switch driver 7, and the power supply terminal VCC and a D terminal of the FF 16. A wiring to which the system power supply voltage Vcc1 output from the output terminal VOUT of the step-up/step-down DC/DC converter 8 is supplied is referred to as a power supply line PL1.

When the signal input to a control terminal ON becomes a high level, the LSW 4 outputs, from the output terminal VOUT, the system power supply voltage Vcc1 input to the input terminal VIN. The control terminal ON of the LSW 4 and the power supply line PL1 are connected via a resistor. Therefore, by supplying the system power supply voltage Vcc1 to the power supply line PL1, the high-level signal is input to the control terminal ON of the LSW 4. The voltage output by the LSW 4 is the same as the system power supply voltage Vcc1 when a wiring resistance or the like is ignored, but in order to distinguish from the system power supply voltage Vcc1, the voltage output from the output terminal VOUT of the LSW 4 is hereinafter referred to as a system power supply voltage Vcc2.

The output terminal VOUT of the LSW 4 is connected to the power supply terminal VDD of the MCU 1, an input terminal VIN of the LSW 5, the power supply terminal VDD of the remaining amount meter IC 12, the power supply terminal VCC of the ROM 6, the emitter terminal of the bipolar transistor S1, the resistor Rc, and the power supply terminal VCC of the FF 17. A wiring to which the system power supply voltage Vcc2 output from the output terminal VOUT of the LSW 4 is supplied is referred to as a power supply line PL2.

When a signal input to a control terminal ON becomes a high level, the LSW 5 outputs, from an output terminal VOUT thereof, the system power supply voltage Vcc2 input to the input terminal VIN. The control terminal ON of the LSW 5 is connected to a terminal P23 of the MCU 1. A voltage output by the LSW 5 is the same as the system power supply voltage Vcc2 when a wiring resistance or the like is ignored, but in order to distinguish from the system power supply voltage Vcc2, the voltage output from the output terminal VOUT of the LSW 5 is hereinafter referred to as a system power supply voltage Vcc3. A wiring to which the system power supply voltage Vcc3 output from the output terminal VOUT of the LSW 5 is supplied is referred to as a power supply line PL3.

A series circuit of the thermistor T2 and a resistor Rt2 is connected to the power supply line PL3, and the resistor Rt2 is connected to the ground line. The thermistor T2 and the resistor Rt2 constitute a voltage divider circuit, and a connection point thereof is connected to a terminal P21 of the MCU 1. The MCU 1 detects a temperature variation (resistance value variation) of the thermistor T2 based on the voltage input to the terminal P21, and determines presence or absence of a puff operation based on a temperature variation amount.

A series circuit of the thermistor T3 and a resistor Rt3 is connected to the power supply line PL3, and the resistor Rt3 is connected to the ground line. The thermistor T3 and the resistor Rt3 constitute a voltage divider circuit, and a connection point thereof is connected to a terminal P13 of the MCU 1 and an inverting input terminal of the operational amplifier OP2. The MCU 1 detects a temperature of the thermistor T3 (corresponding to the temperature of the heater HTR) based on the voltage input to the terminal P13.

A series circuit of the thermistor T4 and a resistor Rt4 is connected to the power supply line PL3, and the resistor Rt4 is connected to the ground line. The thermistor T4 and the resistor Rt4 constitute a voltage divider circuit, and a connection point thereof is connected to a terminal P12 of the MCU 1 and an inverting input terminal of the operational amplifier OP3. The MCU 1 detects a temperature of the thermistor T4 (corresponding to the temperature of the case 110) based on the voltage input to the terminal P12.

A source terminal of a switch S7 constituted by a MOSFET is connected to the power supply line PL2. A gate terminal of the switch S7 is connected to a terminal P20 of the MCU 1. A drain terminal of the switch S7 is connected to one of a pair of connectors to which the vibration motor M is connected. The other of the pair of connectors is connected to the ground line. The MCU 1 can control opening and closing of the switch S7 by operating a potential of the terminal P20 to vibrate the vibration motor M in a specific pattern. A dedicated driver IC may be used instead of the switch S7.

A positive power supply terminal of the operational amplifier OP2 and a voltage divider circuit Pd (series circuit of two resistors) connected to a non-inverting input terminal of the operational amplifier OP2 are connected to the power supply line PL2. A connection point of the two resistors constituting the voltage divider circuit Pd is connected to the non-inverting input terminal of the operational amplifier OP2. The operational amplifier OP2 outputs a signal corresponding to the temperature of the heater HTR (signal corresponding to a resistance value of the thermistor T3). In the present embodiment, since a thermistor having the NTC characteristic is used as the thermistor T3, an output voltage of the operational amplifier OP2 decreases as the temperature of the heater HTR (temperature of the thermistor T3) increases. A reason is that a negative power supply terminal of the operational amplifier OP2 is connected to the ground line, and the value of the output voltage of the operational amplifier OP2 becomes substantially equal to the value of the ground potential when the voltage value (divided value by the thermistor T3 and the resistor Rt3) input to the inverting input terminal of the operational amplifier OP2 becomes higher than the voltage value (divided value by the voltage divider circuit Pd) input to the non-inverting input terminal of the operational amplifier OP2. That is, when the temperature of the heater HTR (temperature of the thermistor T3) becomes high, the output voltage of the operational amplifier OP2 becomes a low level.

When a thermistor having the PTC characteristic is used as the thermistor T3, outputs of voltage divider circuits of the thermistor T3 and the resistor Rt3 may be connected to the non-inverting input terminal of the operational amplifier OP2, and an output of the voltage divider circuit Pd may be connected to the inverting input terminal of the operational amplifier OP2.

A positive power supply terminal of the operational amplifier OP3 and a voltage divider circuit Pe (series circuit of two resistors) connected to a non-inverting input terminal of the operational amplifier OP3 are connected to the power supply line PL2. A connection point of the two resistors constituting the voltage divider circuit Pe is connected to the non-inverting input terminal of the operational amplifier OP3. The operational amplifier OP3 outputs a signal corresponding to the temperature of the case 110 (signal corresponding to a resistance value of the thermistor T4). In the present embodiment, since a thermistor having the NTC characteristic is used as the thermistor T4, the output voltage of the operational amplifier OP3 decreases as the temperature of the case 110 increases. A reason is that a negative power supply terminal of the operational amplifier OP3 is connected to the ground line, and the value of the output voltage of the operational amplifier OP3 becomes substantially equal to the value of the ground potential when the voltage value (divided value by the thermistor T4 and the resistor Rt4) input to the inverting input terminal of the operational amplifier OP3 becomes higher than the voltage value (divided value by the voltage divider circuit Pe) input to the non-inverting input terminal of the operational amplifier OP3. That is, when the temperature of the thermistor T4 becomes high, the output voltage of the operational amplifier OP3 becomes a low level.

When a thermistor having the PTC characteristic is used as the thermistor T4, outputs of voltage divider circuits of the thermistor T4 and the resistor Rt4 may be connected to the non-inverting input terminal of the operational amplifier OP3, and an output of the voltage divider circuit Pe may be connected to the inverting input terminal of the operational amplifier OP3 .

A resistor R1 is connected to an output terminal of the operational amplifier OP2. A cathode of a diode D1 is connected to the resistor R1. An anode of the diode D1 is connected to an output terminal of the operational amplifier OP3, a D terminal of the FF 17, and a CLR( ) terminal of the FF 17. A resistor R2 connected to the power supply line PL1 is connected to a connection line between the resistor R1 and the diode D1. In addition, a CLR( ) terminal of the FF 16 is connected to the connection line.

One end of a resistor R3 is connected to a connection line between the D terminal of the FF 17 and a connection point of the anode of the diode D1 and the output terminal of the operational amplifier OP3. The other end of the resistor R3 is connected to the power supply line PL2. Further, an anode of the diode D2 connected to the notification terminal 12a of the remaining amount meter IC 12, an anode of a diode D3, and the CLR( ) terminal of the FF 17 are connected to the connection line. A cathode of the diode D3 is connected to a terminal P5 of the MCU 1.

When the temperature of the heater HTR becomes excessively high, the signal output from the operational amplifier OP2 becomes small, and the signal input to the CLR( ) terminal becomes a low level, the FF 16 inputs a high-level signal from a QC) terminal to a terminal P11 of the MCU 1. A high-level system power supply voltage Vcc1 is supplied from the power supply line PL1 to the D terminal of the FF 16. Therefore, in the FF 16, a low-level signal is continuously output from the Q( ) terminal unless the signal input to the CLR( ) terminal operating with a negative logic becomes a low level.

The signal input to the CLR( ) terminal of the FF 17 becomes a low level when the temperature of the heater HTR becomes excessively high, when the temperature of the case 110 becomes excessively high, or when a low-level signal indicating abnormality detection is output from the notification terminal 12a of the remaining amount meter IC 12. The FF 17 outputs a low-level signal from the Q terminal when the signal input to the CLR( ) terminal becomes a low level. The low-level signal is input to a terminal P10 of the MCU 1, the gate terminal of the switch S6, the enable terminal EN of the step-up DC/DC converter 9, and the base terminal of the bipolar transistor S1 connected to the charging IC 2. When a low-level signal is input to the gate terminal of the switch S6, a gate-source voltage of the N-channel MOSFET constituting the switch S6 becomes lower than a threshold voltage, and thus the switch S6 is turned off. When a low-level signal is input to the enable terminal EN of the step-up DC/DC converter 9, the enable terminal EN of the step-up DC/DC converter 9 is a positive logic, and thus the step-up operation is stopped. When a low-level signal is input to the base terminal of the bipolar transistor S1, the bipolar transistor S1 is turned on (an amplified current is output from the collector terminal). When the bipolar transistor S1 is turned on, a high-level system power supply voltage Vcc2 is input to a CE(o ) terminal of the charging IC 2 via the bipolar transistor S1. Since the CE( ) terminal of the charging IC 2 is a negative logic, the charging of the power supply BAT is stopped. Accordingly, the heating of the heater HTR and the charging of the power supply BAT are stopped. Even when the MCU 1 outputs a low-level enable signal from the terminal P22 to the charge enable terminal CE( ) of the charging IC 2, an amplified current is input from the collector terminal to the terminal P22 of the MCU 1 and the charge enable terminal CE( ) of the charging IC 2 when the bipolar transistor S1 is turned on. Accordingly, it should be noted that a high-level signal is input to the charge enable terminal CE( ) of the charging IC 2.

A high-level system power supply voltage Vcc2 is supplied from the power supply line PL2 to the D terminal of the FF 17. Therefore, in the FF 17, a high-level signal continues to be output from the Q terminal unless a signal input to the CLR( ) terminal operating in a negative logic becomes a low level. When a low-level signal is output from the output terminal of the operational amplifier OP3, the low-level signal is input to the CLR( ) terminal of the FF 17 regardless of the level of the signal output from the output terminal of the operational amplifier OP2. It should be noted that When a high-level signal is output from the output terminal of the operational amplifier OP2, the low-level signal output from the output terminal of the operational amplifier OP3 is not affected by the high-level signal by the diode D1. In addition, when a low-level signal is output from the output terminal of the operational amplifier OP2, even when a high-level signal is output from the output terminal of the operational amplifier OP3, the high-level signal is replaced with a low-level signal via the diode D1 .

The power supply line PL2 further branches from the MCU-mounted board 161 toward the LED-mounted board 163 and the Hall IC-mounted board 164. The power supply terminal VDD of the Hall IC 13, the power supply terminal VCC of the communication IC 15, and the power supply terminal VDD of the Hall IC 14 are connected to the branched power supply line PL2.

An output terminal OUT of the Hall IC 13 is connected to a terminal P3 of the MCU 1 and a terminal SW2 of the switch driver 7. When the outer panel 115 is detached, a low-level signal is output from the output terminal OUT of the Hall IC 13. The MCU 1 determines whether the outer panel 115 is attached based on the signal input to the terminal P3.

The LED-mounted board 163 is provided with the series circuit (series circuit of a resistor and a capacitor) connected to the operation switch OPS. The series circuit is connected to the power supply line PL2. A connection point between the resistor and the capacitor of the series circuit is connected to the terminal P4 of the MCU 1, the operation switch OPS, and a terminal SW1 of the switch driver 7. In a state where the operation switch OPS is not pressed, the operation switch OPS is not conducted, and the signals input to the terminal P4 of the MCU 1 and the terminal SW1 of the switch driver 7 become a high level by the system power supply voltage Vcc2. When the operation switch OPS is pressed and the operation switch OPS is brought into a conductive state, the signals input to the terminal P4 of the MCU 1 and the terminal SW1 of the switch driver 7 become a low level because of connection to the ground line. The MCU 1 detects the operation of the operation switch OPS based on the signal input to the terminal P4.

The switch driver 7 is provided with a reset input terminal RSTB. The reset input terminal RSTB is connected to the control terminal ON of the LSW 4. When both the levels of the signals input to the terminal SW1 and the terminal SW2 become a low level (a state where the outer panel 115 is detached and the operation switch OPS is pressed), the switch driver 7 outputs a low-level signal from the reset input terminal RSTB, thereby stopping the output operation of the LSW 4. That is, when the operation switch OPS, which is originally pressed down via the pressing portion 117 of the outer panel 115, is directly pressed down by the user in a state where the outer panel 115 is detached, both the levels of the signals input to the terminal SW1 and the terminal SW2 of the switch driver 7 become a low level.

### <Operation in Each Operation Mode of Inhaler>

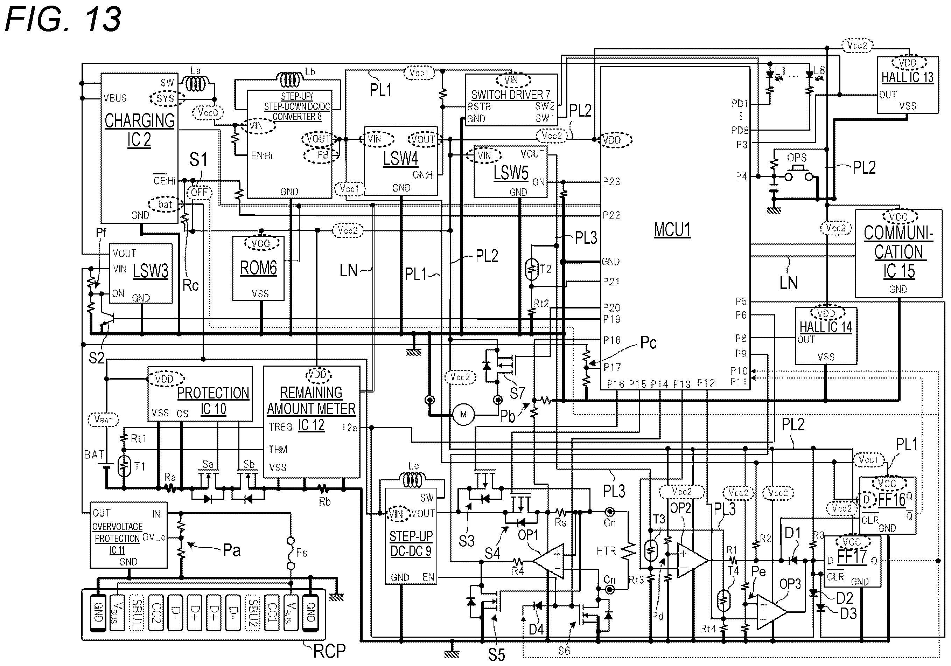

Hereinafter, operations of the electric circuit illustrated in Fig. 10 will be described with reference to Figs. 13 to 19.

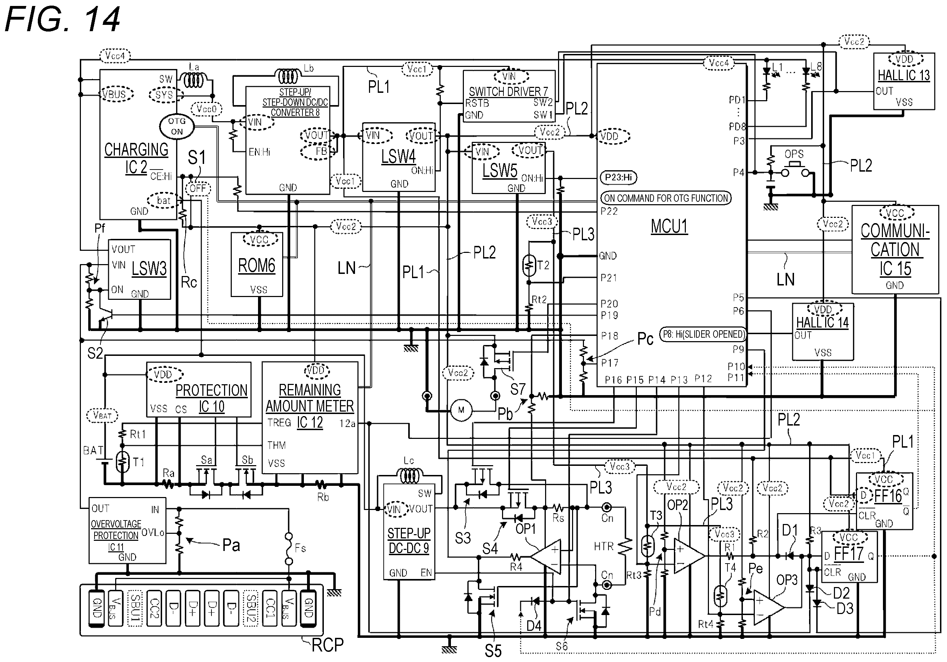

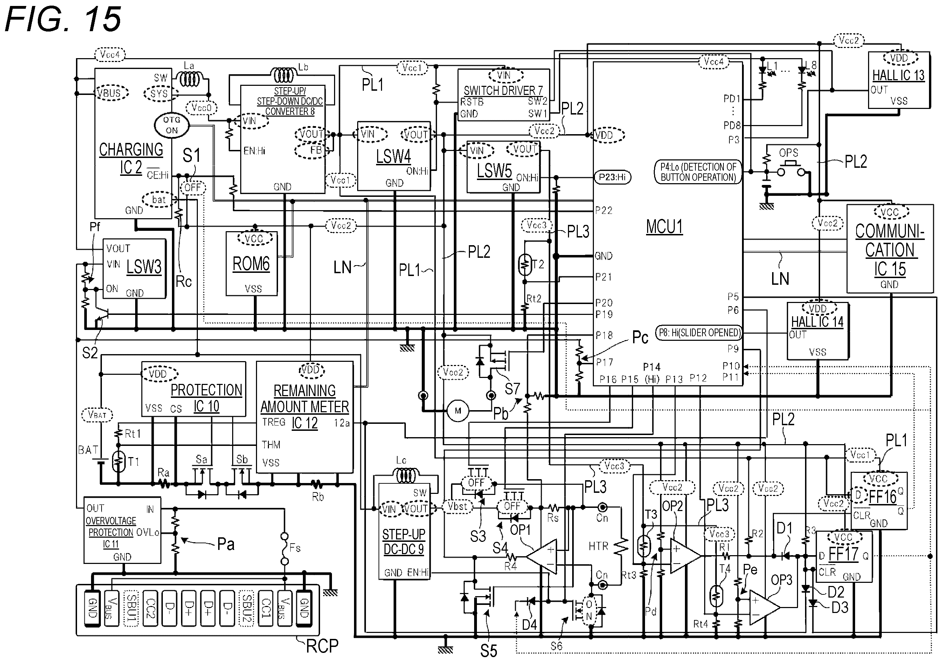

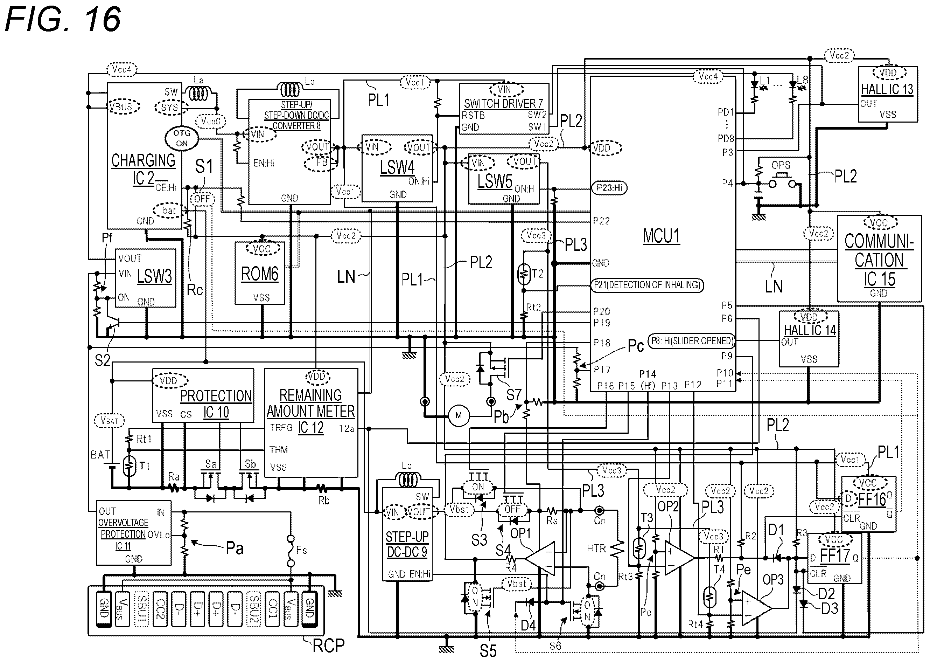

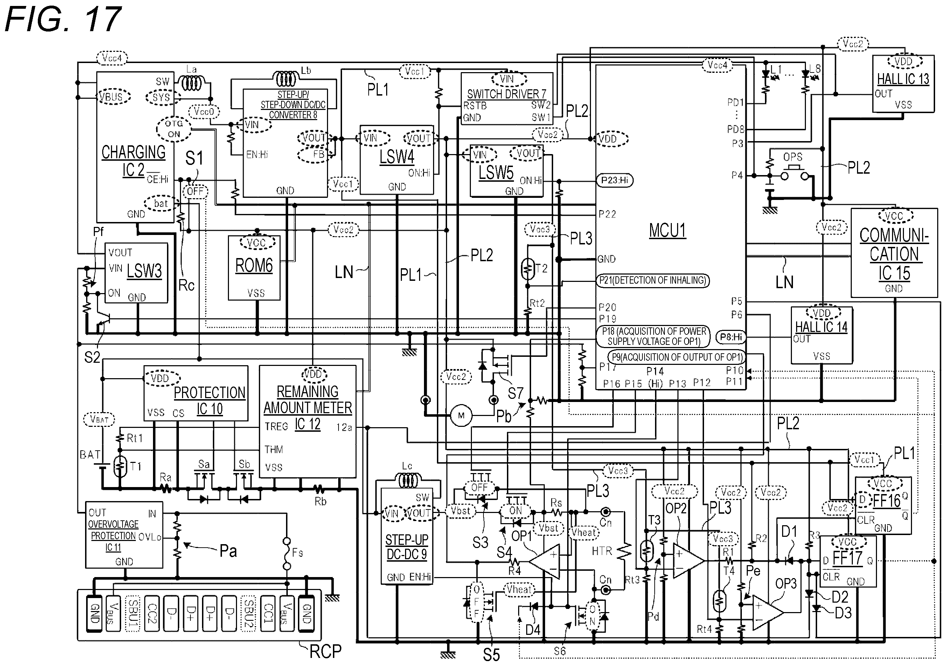

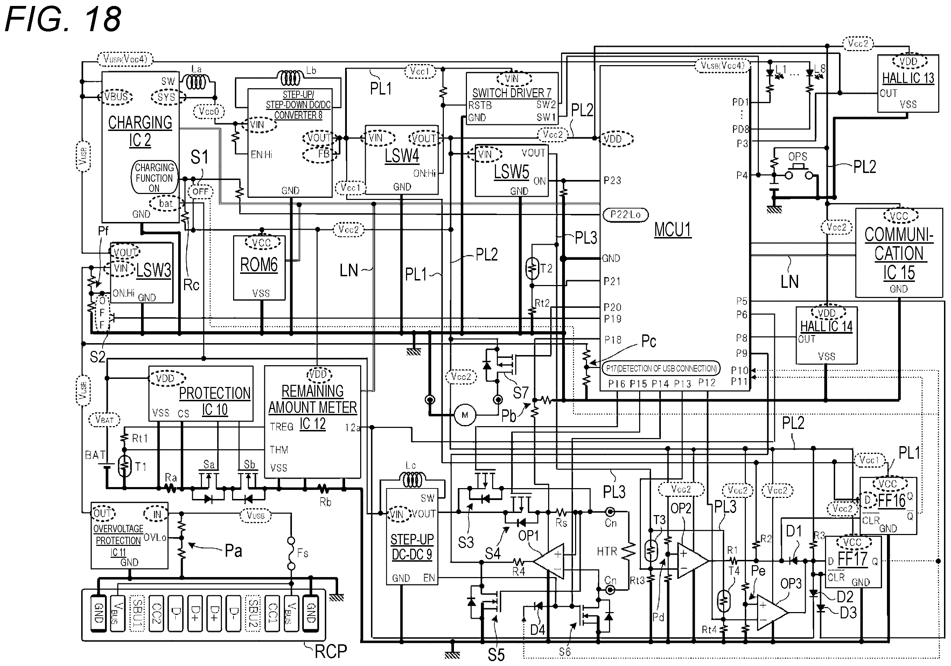

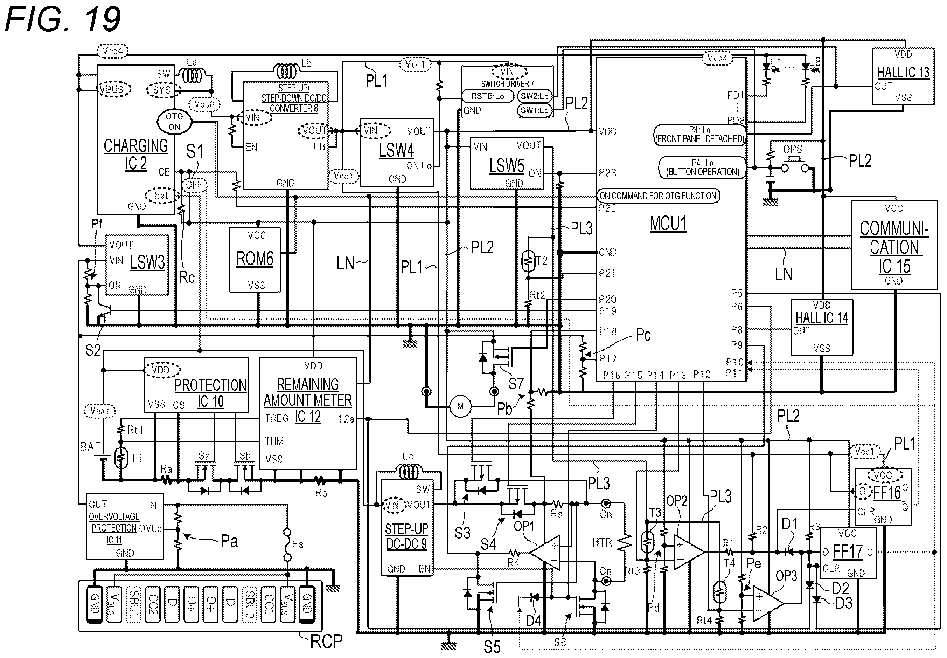

Fig. 13 is a diagram for illustrating an operation of the electric circuit in the sleep mode. Fig. 14 is a diagram for illustrating an operation of the electric circuit in the active mode. Fig. 15 is a diagram for illustrating an operation of the electric circuit in the heating initial setting mode. Fig. 16 is a diagram for illustrating an operation of the electric circuit at the time of heating the heater HTR in the heating mode. Fig. 17 is a diagram for illustrating an operation of the electric circuit at the time of detecting the temperature of the heater HTR in the heating mode. Fig. 18 is a diagram for illustrating an operation of the electric circuit in the charging mode. Fig. 19 is a diagram for illustrating an operation of the electric circuit at the time of resetting (restarting) the MCU 1. In each of Figs. 13 to 19, terminals surrounded by a broken ellipse, among the terminals of the electronic components formed into chips, indicate terminals to which the power supply voltage V_{BAT}, the USB voltage V_{USB}, the system power supply voltage, and the like are input or output.

In any operation mode, the power supply voltage V_{BAT} is input to the power supply terminal VDD of the protection IC 10, the input terminal VIN of the step-up DC/DC converter 9, and the charging terminal bat of the charging IC 2.

### <Sleep Mode: Fig. 13>

The MCU 1 enables the V_{BAT} power path function of the charging IC 2 and disables the OTG function and the charging function. The USB voltage Vusa is not input to the input terminal VBUS of the charging IC 2, whereby the V_{BAT} power path function of the charging IC 2 is enabled. Since a signal for enabling the OTG function from the communication line LN is not output from the MCU 1 to the charging IC 2, the OTG function is disabled. Therefore, the charging IC 2 generates the system power supply voltage Vcc0 from the power supply voltage V_{BAT} input to the charging terminal bat, and outputs the system power supply voltage Vcc0 from the output terminal SYS. The system power supply voltage Vcc0 output from the output terminal SYS is input to the input terminal VIN and the enable terminal EN of the step-up/step-down DC/DC converter 8. The step-up/step-down DC/DC converter 8 is enabled by inputting the high-level system power supply voltage Vcc0 to the enable terminal EN which is a positive logic, generates the system power supply voltage Vcc1 from the system power supply voltage Vcc0, and outputs the system power supply voltage Vcc1 from the output terminal VOUT. The system power supply voltage Vcc1 output from the output terminal VOUT of the step-up/step-down DC/DC converter 8 is supplied to the input terminal VIN of the LSW 4, the control terminal ON of the LSW 4, the input terminal VIN of the switch driver 7, and the power supply terminal VCC and the D terminal of the FF 16.

By inputting the system power supply voltage Vcc1 to the control terminal ON, the LSW 4 outputs, from the output terminal VOUT, the system power supply voltage Vcc1 input to the input terminal VIN as the system power supply voltage Vcc2. The system power supply voltage Vcc2 output from the LSW 4 is input to the power supply terminal VDD of the MCU 1, the input terminal VIN of the LSW 5, the power supply terminal VDD of the Hall IC 13, the power supply terminal VCC of the communication IC 15, and the power supply terminal VDD of the Hall IC 14. Further, the system power supply voltage Vcc2 is supplied to the power supply terminal VDD of the remaining amount meter IC 12, the power supply terminal VCC of the ROM 6, the resistor Rc and the bipolar transistor S1 connected to the charge enable terminal CE( ) of the charging IC 2, the power supply terminal VCC of the FF 17, the positive power supply terminal of the operational amplifier OP3, the voltage divider circuit Pe, the positive power supply terminal of the operational amplifier OP2, and the voltage divider circuit Pd. The bipolar transistor S1 connected to the charging IC 2 is turned off unless a low-level signal is output from the Q terminal of the FF 17. Therefore, the system power supply voltage Vcc2 generated by the LSW 4 is also input to the charge enable terminal CE( ) of the charging IC 2. Since the charge enable terminal CE( ) of the charging IC 2 is a negative logic, the charging function by the charging IC 2 is turned off in this state.

In this manner, since the LSW 5 stops outputting the system power supply voltage Vcc3 in the sleep mode, the supply of power to the electronic components connected to the power supply line PL3 is stopped. In addition, since the OTG function of the charging IC 2 is stopped in the sleep mode, the supply of power to the LEDs L1 to L8 is stopped.

### <Active Mode: Fig. 14>

When the MCU 1 detects that the signal input to the terminal P8 becomes a high level and the slider 119 is opened from the sleep mode state in Fig. 13, the MCU 1 inputs a high-level signal to the control terminal ON of the LSW 5 from the terminal P23. Accordingly, the LSW 5 outputs, from the output terminal VOUT, the system power supply voltage Vcc2 input to the input terminal VIN as the system power supply voltage Vcc3. The system power supply voltage Vcc3 output from the output terminal VOUT of the LSW 5 is supplied to the thermistor T2, the thermistor T3, and the thermistor T4.

Further, when the MCU 1 detects that the slider 119 is opened, the MCU 1 enables the OTG function of the charging IC 2 via the communication line LN. Accordingly, the charging IC 2 outputs, from the input terminal VBUS, the system power supply voltage Vcc4 obtained by stepping up the power supply voltage V_{BAT} input from the charging terminal bat. The system power supply voltage Vcc4 output from the input terminal VBUS is supplied to the LEDs L1 to L8.

### <Heating Initial Setting Mode: Fig. 15>

When the signal input to the terminal P4 becomes a low level (the operation switch OPS is pressed) from the state in Fig. 14, the MCU 1 performs various settings necessary for heating, and then inputs a high-level enable signal from the terminal P14 to the enable terminal EN of the step-up DC/DC converter 9. Accordingly, the step-up DC/DC converter 9 outputs, from the output terminal VOUT, the drive voltage V_{bst} obtained by stepping up the power supply voltage V_{BAT}. The drive voltage V_{bst} is supplied to the switch S3 and the switch S4. In this state, the switch S3 and the switch S4 are turned off. In addition, the switch S6 is turned on by a high-level enable signal output from the terminal P14. Accordingly, a negative electrode-side terminal of the heater HTR is connected to the ground line, and the heater HTR is brought into a state of being heated by turning on the switch S3. After the enable signal of the high-level signal is output from the terminal P14 of the MCU 1, the operation mode shifts to the heating mode.

### <Heater Heating in Heating Mode: Fig. 16>

In the state of Fig. 15, the MCU 1 starts switching control of the switch S3 connected to the terminal P16 and switching control of the switch S4 connected to the terminal P15. The switching control may be automatically started when the heating initial setting mode described above is completed, or may be started by further pressing the operation switch OPS. Specifically, the MCU 1 performs, as illustrated in Fig. 16, heating control in which the switch S3 is turned on, the switch S4 is turned off, the drive voltage V_{bst} is supplied to the heater HTR, and the heater HTR is heated for generating aerosol, and performs, as illustrated in Fig. 17, temperature detection control in which the switch S3 is turned off, the switch S4 is turned on, and the temperature of the heater HTR is detected.

As illustrated in Fig. 16, during the heating control, the drive voltage V_{bst} is also supplied to a gate of the switch S5, and the switch S5 is turned on. In addition, during the heating control, the drive voltage V_{bst} passing through the switch S3 is also input to the positive power supply terminal of the operational amplifier OP1 via the resistor Rs. A resistance value of the resistor Rs is small enough to be negligible as compared with an internal resistance value of the operational amplifier OP1. Therefore, during the heating control, the voltage input to the positive power supply terminal of the operational amplifier OP1 is substantially equal to the drive voltage V_{bst}.

A resistance value of the resistor R4 is larger than an on-resistance value of the switch S5. The operational amplifier OP1 also operates during the heating control, but the switch S5 is turned on during the heating control. In a state where the switch S5 is turned on, the output voltage of the operational amplifier OP1 is divided by a voltage divider circuit of the resistor R4 and the switch S5 and is input to the terminal P9 of the MCU 1. The resistance value of the resistor R4 is larger than the on-resistance value of the switch S5, whereby the voltage input to the terminal P9 of the MCU 1 becomes sufficiently small. Accordingly, it is possible to prevent a large voltage from being input from the operational amplifier OP1 to the MCU 1.

### <Heater Temperature Detection in Heating Mode: Fig. 17>

As illustrated in Fig. 17, during the temperature detection control, the drive voltage V_{bst} is input to the positive power supply terminal of the operational amplifier OP1 and is input to the voltage divider circuit Pb. The voltage divided by the voltage divider circuit Pb is input to the terminal P18 of the MCU 1. The MCU 1 acquires a reference voltage Vₜₑₘₚ applied to a series circuit of the resistor Rs and the heater HTR during the temperature detection control based on the voltage input to the terminal P18.

In addition, during the temperature detection control, the drive voltage V_{bst} (reference voltage Vₜₑₘₚ) is supplied to the series circuit of the resistor Rs and the heater HTR. Further, a voltage Vₕₑₐₜ obtained by dividing the drive voltage V_{bst} (reference voltage Vₜₑₘₚ) by the resistor Rs and the heater HTR is input to the non-inverting input terminal of the operational amplifier OP1. Since the resistance value of the resistor Rs is sufficiently larger than a resistance value of the heater HTR, the voltage Vₕₑₐₜ is a value sufficiently lower than the drive voltage V_{bst}. During the temperature detection control, the low voltage Vₕₑₐₜ is also supplied to the gate terminal of the switch S5, whereby the switch S5 is turned off. The operational amplifier OP1 amplifies a difference between the voltage input to the inverting input terminal and the voltage Vₕₑₐₜ input to the non-inverting input terminal and outputs the amplified difference.

An output signal of the operational amplifier OP1 is input to the terminal P9 of the MCU 1. The MCU 1 acquires the temperature of the heater HTR based on the signal input to the terminal P9, the reference voltage Vₜₑₘₚ acquired based on the input voltage of the terminal P18, and a known electric resistance value of the resistor Rs. The MCU 1 performs the heating control of the heater HTR (for example, control such that the temperature of the heater HTR becomes a target temperature) based on the acquired temperature of the heater HTR.

The MCU 1 can also acquire the temperature of the heater HTR even in a period in which the switch S3 and the switch S4 are turned off (a period in which the heater HTR is not energized). Specifically, the MCU 1 acquires the temperature of the heater HTR based on the voltage input to the terminal P13 (output voltage of the voltage divider circuit including the thermistor T3 and the resistor Rt3).

In addition, the MCU 1 may also acquire the temperature of the case 110 at any timing. Specifically, the MCU 1 acquires the temperature of the case 110 based on the voltage input to the terminal P12 (output voltage of the voltage divider circuit including the thermistor T4 and the resistor Rt4).

### <Charging Mode: Fig. 18>

Fig. 18 illustrates a case where the USB connection is established in the sleep mode. When the USB connection is established, the USB voltage V_{USB} is input to the input terminal VIN of the LSW 3 via the overvoltage protection IC 11. The USB voltage V_{USB} is also supplied to the voltage divider circuit Pf connected to the input terminal VIN of the LSW 3. Since the bipolar transistor S2 is turned on immediately after the USB connection is established, the signal input to the control terminal ON of the LSW 3 remains at a low level. The USB voltage V_{USB} is also supplied to the voltage divider circuit Pc connected to the terminal P17 of the MCU 1, and a voltage divided by the voltage divider circuit Pc is input to the terminal P17. The MCU 1 detects that the USB connection is established based on the voltage input to the terminal P17.

When the MCU 1 detects that the USB connection is established, the MCU 1 turns off the bipolar transistor S2 connected to the terminal P19. When a low-level signal is input to a gate terminal of the bipolar transistor S2, the USB voltage V_{USB} divided by the voltage divider circuit Pf is input to the control terminal ON of the LSW 3. Accordingly, a high-level signal is input to the control terminal ON of the LSW 3, and the LSW 3 outputs the USB voltage V_{USB} from the output terminal VOUT. The USB voltage V_{USB} output from the LSW 3 is input to the input terminal VBUS of the charging IC 2. In addition, the USB voltage V_{USB} output from the LSW 3 is supplied to the LEDs L1 to L8 as the system power supply voltage Vcc4.

When the MCU 1 detects that the USB connection is established, the MCU 1 further outputs a low-level enable signal from the terminal P22 to the charge enable terminal CE( ) of the charging IC 2. Accordingly, the charging IC 2 enables the charging function of the power supply BAT and starts charging the power supply BAT by the USB voltage V_{USB} input to the input terminal VBUS.

When the USB connection is established in the active mode, when the MCU 1 detects that the USB connection is established, the MCU 1 turns off the bipolar transistor S2 connected to the terminal P19, outputs a low-level enable signal from the terminal P22 to the charge enable terminal CE( ) of the charging IC 2, and turns off the OTG function of the charging IC 2 by serial communication using the communication line LN. Accordingly, the system power supply voltage Vcc4 supplied to the LEDs L1 to L8 is switched from the voltage generated by the OTG function of the charging IC 2 (voltage based on the power supply voltage V_{BAT}) to the USB voltage V_{USB} output from the LSW 3. The LEDs L1 to L8 is not operated unless ON control of the built-in transistor is not performed by the MCU 1. Therefore, the unstable voltage in a transition period from ON to OFF of the OTG function is prevented from being supplied to the LEDs L1 to L8.

In Fig. 18, a supply state of the system power supply voltage in the charging mode is the same as that in the sleep mode. However, the supply state of the system power supply voltage in the charging mode is preferably the same as that in the active mode illustrated in Fig. 14. That is, in the charging mode, it is preferable that the system power supply voltage Vcc3 is supplied to the thermistors T2 to T4 for temperature management to be described later.

### <Resetting of MCU: Fig. 19>

When the outer panel 115 is detached, the output of the Hall IC 13 becomes a low level, an ON operation of the operation switch OPS is performed, and the signal input to the terminal P4 of the MCU 1 becomes a low level, the terminal SW1 and the terminal SW2 of the switch driver 7 both become a low level. Accordingly, the switch driver 7 outputs a low-level signal from the reset input terminal RSTB. The low-level signal output from the reset input terminal RSTB is input to the control terminal ON of the LSW 4. Accordingly, the LSW 4 stops the output of the system power supply voltage Vcc2 from the output terminal VOUT. By stopping the output of the system power supply voltage Vcc2, the system power supply voltage Vcc2 is not input to the power supply terminal VDD of the MCU 1, and thus the MCU 1 is stopped.

The switch driver 7 returns the signal output from the reset input terminal RSTB to a high level when a time during which the low-level signal is output from the reset input terminal RSTB reaches a predetermined time or when the signal input to either the terminal SW1 or the terminal SW2 becomes a high level. Accordingly, the control terminal ON of the LSW 4 becomes a high level, and the system power supply voltage Vcc2 returns to a state of being supplied to each unit.

Hereinafter, in order to facilitate understanding, the above-described thermistor T1 is also referred to as a power supply thermistor T1, the above-described thermistor T2 is also referred to as a puff thermistor T2, the above-described thermistor T3 is also referred to as a heater thermistor T3, and the above-described thermistor T4 is also referred to as a case thermistor T4.

### (Details of Detection of Inhaling)

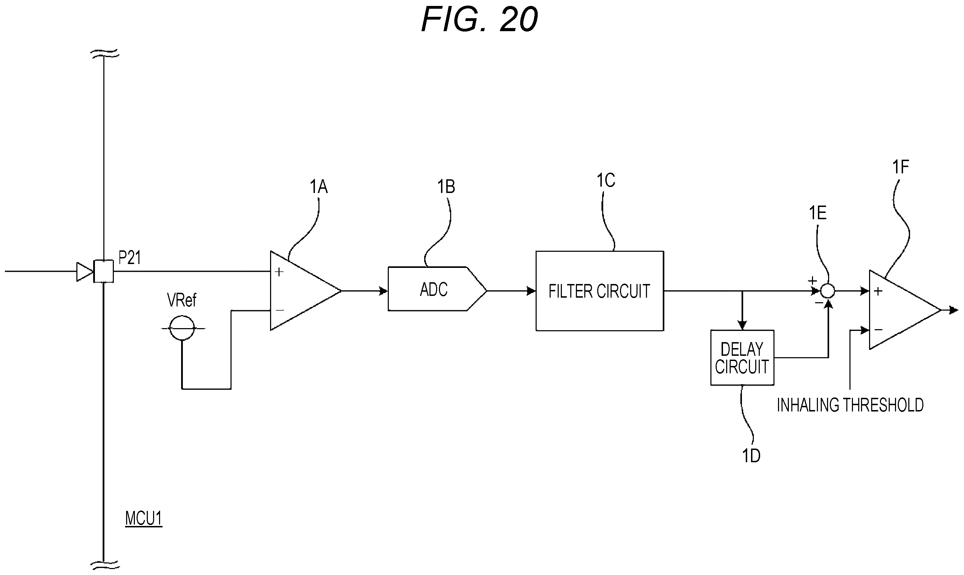

Fig. 20 is a schematic diagram for illustrating a detection process of the inhaling operation by the MCU 1 using the puff thermistor T2. As illustrated in Fig. 20, an operational amplifier 1A, an analog-to-digital converter (ADC) 1B, a filter circuit 1C, a delay circuit 1D, a subtractor 1E, and a comparator 1F are provided in the MCU 1.

A non-inverting input terminal of the operational amplifier 1A is connected to the terminal P21. A reference voltage V_{Ref} is input to an inverting input terminal of the operational amplifier 1A. The reference voltage V_{Ref} may be generated from the system power supply voltage Vcc2 input to the power supply terminal VDD of the MCU 1. The puff thermistor T2 has the NTC characteristic in the example of Fig. 20. A signal obtained by dividing the system power supply voltage Vcc3 by the puff thermistor T2 and the resistor Rt2 is input to the terminal P21. Accordingly, the signal input to the terminal P21 has a larger value as a temperature of the puff thermistor T2 is higher The operational amplifier 1A amplifies and outputs a voltage applied to the puff thermistor T2. The ADC 1B converts an output signal of the operational amplifier 1A into a digital value. The filter circuit 1C performs a filter process such as high-pass filtering, low-pass filtering, and band-pass filtering on a digital signal output from the ADC 1B. The digital signal after the filter process by the filter circuit 1C is input to a positive side of the subtractor 1E. The digital signal is delayed by the delay circuit 1D and input to a negative side of the subtractor 1E. Accordingly, the subtractor 1E outputs a difference value between a digital signal corresponding to a temperature of the puff thermistor T2 obtained at any time t(n) and a digital signal corresponding to a temperature of the puff thermistor T2 obtained at a time t(n-1) before a delay time of the time t(n). When the temperature of the puff thermistor T2 decreases from the time t(n-1) to the time t(n), an output value of the subtractor 1E becomes a negative value and an output of the comparator 1F becomes a low level. When the temperature of the puff thermistor T2 increases from the time t(n-1) to the time t(n), the output value of the subtractor 1E becomes a positive value, and the output of the comparator 1F becomes a high level.

When the mode shifts from the heating initial setting mode to the heating mode, the MCU 1 starts preheating of the heater HTR. As illustrated in Figs. 6 and 7, the puff thermistor T2 is disposed in the vicinity of the heating unit 170. Accordingly, when the temperature of the heater HTR rises by the preheating, the temperature of the puff thermistor T2 also rises accordingly. When the user performs inhaling in this state, the temperature of the puff thermistor T2 slightly decreases due to a flow of a gas inside the case 110. That is, when the inhaling is performed during the preheating of the heater HTR, the output of the subtractor 1E becomes a negative value, and a low-level signal is output from the comparator 1F. When the low-level signal is output from the comparator 1F, the MCU 1 determines that the inhaling operation is performed.

### (Protection Control)

In the inhaler 100, the temperature of the power supply BAT (hereinafter, referred to as a power supply temperature T_{BAT}) can be acquired based on a resistance value (output value) of the power supply thermistor T1, the temperature of the heater HTR (hereinafter, referred to as a heater temperature T_{HTR}) can be acquired based on a resistance value (output value) of the heater thermistor T3, and the temperature of the case 110 (hereinafter, referred to as a case temperature T_{CASE}) can be acquired based on a resistance value (output value) of the case thermistor T4. When at least one of the power supply temperature T_{BAT}, the heater temperature T_{HTR}, and the case temperature T_{CASE} is far different from a value under a recommended environment in which the inhaler 100 is used, the inhaler 100 is configured to execute protection control for prohibiting the charging of the power supply BAT and discharging from the power supply BAT to the heater HTR (hereinafter, also referred to as charging and discharging) to enhance safety. The protection control is executed by the MCU 1 and the FF 17.

The protection control for prohibiting the charging and discharging refers to a matter of controlling the electronic components so as to disable the charging and discharging. In order to disable the discharging from the power supply BAT to the heater HTR, a low-level signal may be input to the enable terminal EN of the step-up DC/DC converter 9 (or the potential of the enable terminal EN may be made unstable) to stop the step-up operation, and a low-level signal may be input to the gate terminal of the switch S6 (or the potential of the gate terminal may be made unstable) to interrupt connection between the heater connector Cn(-) on the negative electrode side and the ground. It is also possible to disable the discharging from the power supply BAT to the heater HTR by performing only one of stopping the step-up operation of the step-up DC/DC converter 9 and interrupting the connection between the heater connector Cn(-) and the ground. In order to disable the charging of the power supply BAT, a high-level signal may be input to the charge enable terminal CE( ) of the charging IC 2 to stop a charging operation of the charging IC 2.

Hereinafter, an example in which the charging and discharging is prohibited as the protection control is described, but from the viewpoint of enhancing safety, the protection control may be control for prohibiting only the charging or control for prohibiting only the discharging.

When the protection control is executed, it is preferable to further perform limitation of the operation mode. Hereinafter, it is assumed that the operation mode is limited when the protection control is executed. However, since management of the operation mode is performed by the MCU 1, the limitation of the operation mode may not be performed in a state where the MCU 1 does not operate for some reason.

The protection control executed by the inhaler 100 includes manual return protection control which can be completed when the MCU 1 is reset by a user operation, automatic return protection control which can be automatically completed by improving a temperature environment without requiring the reset of the MCU 1, and non-return protection control which cannot be completed. The operation modes of the inhaler 100 include an error mode and a permanent error mode in addition to those illustrated in Fig. 9. In the present description, when there is a description of "all the operation modes of the inhaler", it means all the operation modes (all the operation modes illustrated in Fig. 9) except the error mode and the permanent error mode.

When the manual return protection control or the automatic return protection control is executed, the inhaler 100 shifts to the error mode, and shifting to another operation mode is disabled. In the error mode, a state of the power supply voltage (supply state of system power supply voltage) in the immediately preceding operation mode is maintained. That is, in the error mode, functions which can be executed in the immediately preceding operation mode (for example, acquisition of temperature information or the like) except for the charging and discharging can be executed. When the MCU 1 is reset in the error mode, the manual return protection control is completed. When the temperature environment is improved in the error mode, the automatic return protection control is completed. When the manual return protection control or the automatic return protection control is completed, the limitation of the operation mode is released, and the operation mode shifts to the sleep mode. Thereafter, the operation mode can be changed by the user operation or the like.

When the non-return protection control is executed, the inhaler 100 shifts to the permanent error mode. In the permanent error mode, all the functions of the inhaler 100 become unavailable, and the inhaler 100 needs to be repaired or discarded.

The MCU 1 outputs a low-level signal from the terminal P14 to stop the step-up operation of the step-up DC/DC converter 9 and interrupt the connection between the heater connector Cn(-) on the negative electrode side and the ground, and outputs a high-level signal from the terminal P22 to stop the charging operation of the charging IC 2, thereby executing the protection control. When only the charging is prohibited, there is no need to output the low-level signal from the terminal P14, and when only the discharging is prohibited, there is no need to output the high-level signal from the terminal P22.

The FF 17 outputs a low-level signal from the Q terminal to stop the step-up operation of the step-up DC/DC converter 9, interrupt the connection between the heater connector Cn(-) on the negative electrode side and the ground, and stop the charging operation of the charging IC 2 by turning on the bipolar transistor S1, thereby executing the protection control without using the MCU 1.

When a signal input to the CLR( ) terminal is switched from a high level to a low level, the FF 17 outputs a low-level signal from the Q terminal. The low-level signal is also input to the P10 terminal of the MCU 1. While the low-level signal is input to the terminal P10, the MCU 1 does not switch a signal input to a CLK terminal (not illustrated) of the FF 17 from a low level to a high level. In other words, while the low-level signal is input to the terminal P10, a CLK signal of the FF 17 does not rise. In addition, in a state where the MCU 1 freezes, for example, the signal input to the CLK terminal (not illustrated) of the FF 17 remains at a low level. Therefore, in either of a state where the MCU 1 operates normally and the state where the MCU 1 freezes, even when the signal input to the CLR( ) terminal of the FF 17 is switched from the low level to a high level after the low-level signal is output from the Q terminal of the FF 17, the low-level signal continues to be output from the Q terminal of the FF 17. As described with reference to Fig. 19, when the MCU 1 is reset, the FF 17 is restarted (the system power supply voltage Vcc2 is supplied again). Since the reset MCU 1 operates in the sleep mode, the system power supply voltage Vcc3 is not applied to the heater thermistor T3 and the case thermistor T4, and both an output of the operational amplifier OP2 and an output of the operational amplifier OP3 become a high level. Accordingly, a high-level signal is input to the D terminal and the CLR( ) terminal of the FF 17. At this timing, since a low-level signal is not input to the terminal P10 due to the restart of the FF 17, the MCU 1 causes the CLK signal of the FF 17 to rise. Accordingly, an output of the Q terminal of the FF 17 can be returned to the high level. When the output of the Q terminal of the FF 17 returns to the high level, the protection control by the FF 17 is completed.

As described above, the signal output from the Q terminal of the FF 17 is also input to the terminal P10 of the MCU 1. Therefore, the MCU 1 can detect that the FF 17 executes the protection control based on the low-level signal input to the terminal P10. When the MCU 1 detects that the FF 17 has executed the protection control, the MCU 1 preferably causes the notification unit 180 to make a reset request notification of the MCU 1 and shifts to the error mode.

In the inhaler 100, a threshold for temperature determination (hereinafter, referred to as a temperature threshold) is set as follows. Numerical values in parentheses in each temperature threshold and a magnitude relation thereof are preferable examples, and the present invention is not limited thereto. In the following description, it is assumed that each temperature threshold is the value in the parentheses.
Temperature threshold THH0 (340°C)
Temperature threshold THH1 (85°C)
Temperature threshold THH2 (65°C)
Temperature threshold THH3 (60°C)
Temperature threshold THH4 (55°C)
Temperature threshold THH5 (51°C)
Temperature threshold THH6 (48°C)
Temperature threshold THH7 (47°C)
Temperature threshold THH8 (45°C)
Temperature threshold THL1 (0°C)
Temperature threshold THL2 (-5°C)

Next, a circuit configuration necessary for describing the protection control will be described.

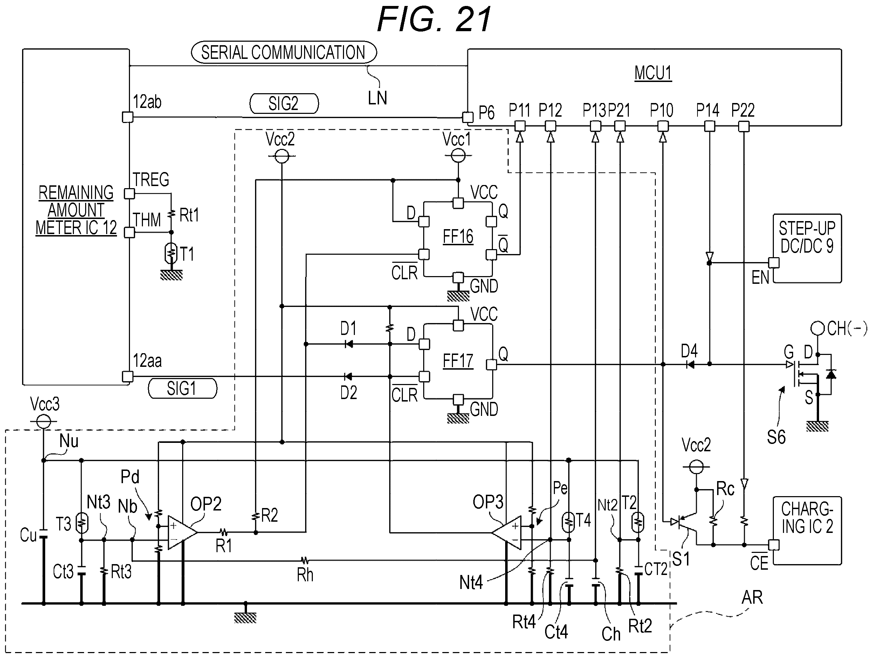

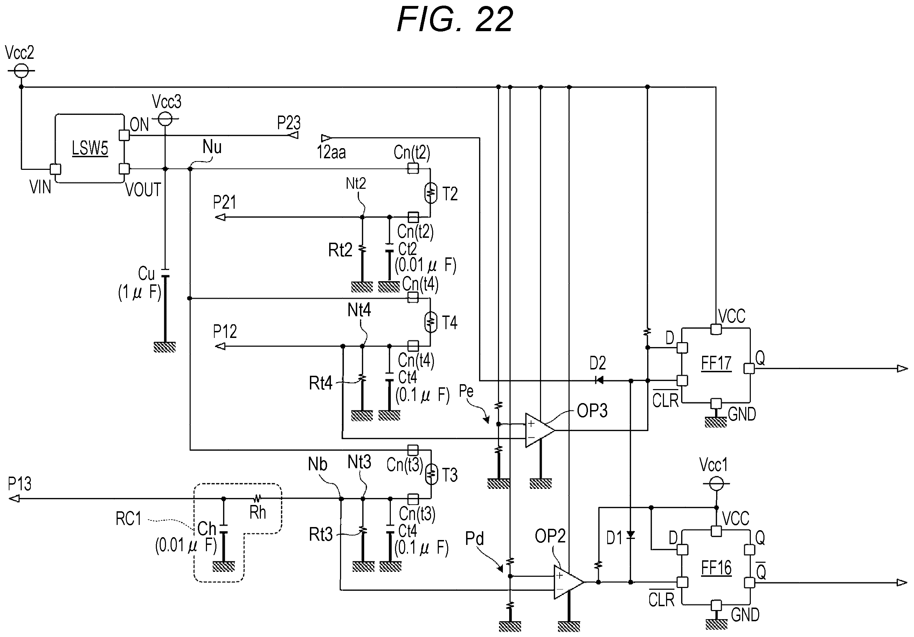

Fig. 21 is a circuit diagram of essential parts illustrating main electronic components related to the thermistors T1 to T4, of the electric circuit illustrated in Fig. 10. Fig. 22 is a diagram illustrating an extracted portion of a range AR surrounded by a broken line in Fig. 21. Fig. 22 illustrates the LSW 5 which generates the system power supply voltage Vcc3 as an electronic component that is not illustrated in Fig. 21.

Fig. 21 illustrates a capacitor Cu, a capacitor Ct3, a resistor Rh, a capacitor Ct4, a capacitor Ch, a capacitor Ct2, a node Nu, a node Nt2, a node Nt3, a node Nt4, and a node Nb as electronic components and nodes which are omitted from illustration in Fig. 10. The capacitor Cu, the capacitor Ct3, the resistor Rh, the capacitor Ct4, the capacitor Ch, and the capacitor Ct2 are each provided for a purpose of reducing noise (smoothing a signal). In addition, the notification terminal 12a of the remaining amount meter IC 12, which is a single terminal in Fig. 10, is illustrated separately as a first notification terminal 12aa and a second notification terminal 12ab in Fig. 21.

As illustrated in Fig. 22, the node Nu connects the output terminal VOUT of the LSW 5 and a positive electrode side of the connector Cn (t2) to which the puff thermistor T2 is connected. One end of the capacitor Cu is connected to a connection line between the node Nu and the output terminal VOUT of the LSW 5. The other end of the capacitor Cu is connected to the ground. A capacitance of the capacitor Cu is, for example, 1 µF. A positive electrode side of the connector Cn (t4) to which the case thermistor T4 is connected and a positive electrode side of the connector Cn (t3) to which the heater thermistor T3 is connected are each connected to the node Nu.

The node Nt2 connects a negative electrode side of the connector Cn (t2) and one end of the resistor Rt2. The other end of the resistor Rt2 is connected to the ground. One end of the capacitor Ct2 is connected to a connection line between the node Nt2 and the negative electrode side of the connector Cn (t2). The other end of the capacitor Ct2 is connected to the ground. A capacitance of the capacitor Ct2 is, for example, 0.01 µF. The node Nt2 is connected to the terminal P21 of the MCU 1.

The node Nt4 connects a negative electrode side of the connector Cn (t4) and one end of the resistor Rt4. The other end of the resistor Rt4 is connected to the ground. One end of the capacitor Ct4 is connected to a connection line between the node Nt4 and the negative electrode side of the connector Cn (t4). The other end of the capacitor Ct4 is connected to the ground. A capacitance of the capacitor Ct4 is, for example, 0.1 µF. The node Nt4 is connected to the terminal P12 of the MCU 1. An inverting input terminal of the operational amplifier OP3 is connected to a connection line between the node Nt4 and the terminal P12 of the MCU 1.

The node Nt3 connects a negative electrode side of the connector Cn (t3) and one end of the resistor Rt3. The other end of the resistor Rt3 is connected to the ground. One end of the capacitor Ct3 is connected to a connection line between the node Nt3 and the negative electrode side of the connector Cn (t3). The other end of the capacitor Ct3 is connected to the ground. A capacitance of the capacitor Ct3 is, for example, 0.1 µF. One end of the resistor Rh is connected to the node Nt3. The other end of the resistor Rh is connected to the terminal P13 of the MCU 1. One end of the capacitor Ch is connected to a connection line between the other end of the resistor Rh and the terminal P13 of the MCU 1. The other end of the capacitor Ch is connected to the ground. A capacitance of the capacitor Ch is, for example, 0.01 µF. The resistor Rh and the capacitor Ch constitute a filter circuit RC1 including a primary RC series circuit.

The node Nb connects the one end of the resistor Rh and the node Nt3. The inverting input terminal of the operational amplifier OP2 is connected to the node Nb.

### (Preferred Configuration of Capacitor)

The capacitances of the capacitor Cu, the capacitor Ct3, the capacitor Ct4, the capacitor Ch, and the capacitor Ct2 preferably satisfy the following relations (A) to (C).
(A) The capacitance of the capacitor Cu is larger than each of capacitances of the capacitor Ct3, the capacitor Ct4, and the capacitor Ct2.
   As illustrated in Fig. 22, the capacitor Cu is provided on an upstream side (high potential side) with respect to three voltage divider circuits including the voltage divider circuit of the puff thermistor T2 and the resistor Rt2, the voltage divider circuit of the case thermistor T4 and the resistor Rt4, and the voltage divider circuit of the heater thermistor T3 and the resistor Rt3. Since the capacitor Cu having a large capacitance is provided at this position, an unstable power supply is less likely to be supplied to each of the voltage divider circuits, and thus output signals of the thermistors T2 to T4 can be stabilized and the inhaler 100 can be stably operated. In addition, since the capacitor Cu having a large capacitance is present on the upstream side, the capacitances of the capacitor Ct2, the capacitor Ct3, and the capacitor Ct4 provided on a downstream side can be reduced. Therefore, an area of the circuit board can be effectively utilized, and the cost and size of the inhaler 100 can be reduced. Since the capacitor Cu is provided, it is possible to obtain an effect of smoothing a transient voltage which may be generated when ON/OFF of the LSW 5 is performed in which the LSW 5 is intermittently turned on according to opening and closing of the slider 119, resetting of the MCU 1, or the like.
(B) The capacitance of the capacitor Ct2 is smaller than each of capacitances of the capacitor Ct3 and the capacitor Ct4.

The MCU 1 executes the filter process only on the signal input to the terminal P21 among the signals input to the terminal P21, the terminal P12, and the terminal P13, respectively, as described with reference to Fig. 20. In addition, the MCU 1 detects the inhaling operation based on a change in the signal input to the terminal P21. Accordingly, it is not preferable that the signal input to the terminal P21 is largely smoothed before being input. By reducing the capacitance of the capacitor Ct2, noise is appropriately removed from the output of the puff thermistor T2, and a result of the filter process is hardly affected. Accordingly, the inhaling detection can be performed with high accuracy.

On the other hand, by setting the capacitor Ct3 and the capacitor Ct4 to have a large capacitance, a sufficiently smoothed signal can be input to the operational amplifier OP2 and the operational amplifier OP3. Accordingly, a possibility that the operational amplifier OP2 and the operational amplifier OP3 operate erroneously can be reduced, and the MCU 1 can acquire output values of the heater thermistor T3 and the case thermistor T4 with high accuracy.

(C) The capacitance of the capacitor Ch is smaller than the capacitance of the capacitor Ct3.

By providing the RC filter circuit RC1, it is possible to obtain an effect of removing spike noise which cannot be smoothed by the capacitor Ct3. That is, although the RC filter circuit RC1 plays an auxiliary role of the capacitor Ct3, a delay of the output signal of the heater thermistor T3 due to the RC filter circuit RC1 can be prevented by using a capacitor having a smaller capacitance than that of the capacitor Ct3 in such an auxiliary RC filter circuit RC1. As a result, the MCU 1 can acquire the heater temperature T_{HTR} at high speed and with low noise.

Although the output signal of the heater thermistor T3 is also input to the operational amplifier OP2, the input terminal of the operational amplifier OP2 is connected between the node Nt3 and the RC filter circuit RC1. Therefore, the output signal of the heater thermistor T3 input to the operational amplifier OP2 is prevented from being delayed by the RC filter circuit RC1.

As illustrated in Fig. 21, the first notification terminal 12aa of the remaining amount meter IC 12 is connected to the cathode of the diode D2. The second notification terminal 12ab of the remaining amount meter IC 12 is connected to the terminal P6 of the MCU 1.

The remaining amount meter IC 12 acquires the power supply temperature T_{BAT} at regular timing (for example, every second) and holds the power supply temperature T_{BAT} in a built-in register. The remaining amount meter IC 12 can communicate with the MCU 1 via the communication line LN in an operation mode other than the sleep mode in which the MCU 1 achieves power saving. When a transmission request of the power supply temperature T_{BAT} is received from the MCU 1 via the communication line LN, the remaining amount meter IC 12 transmits the power supply temperature T_{BAT} to the MCU 1 in response to the transmission request.

In the sleep mode, the remaining amount meter IC 12 outputs a high-temperature notification signal SIG2a from the second notification terminal 12ab when the power supply temperature T_{BAT} satisfies a high temperature condition (a condition that a state of being equal to or higher than the temperature threshold THH1 (85°C) continues a plurality of times) (a case where an output value of the power supply thermistor T1 is abnormal). In the sleep mode, the MCU 1 cannot communicate with the remaining amount meter IC 12 via the communication line LN. Accordingly, the high-temperature notification signal SIG2a may be an interrupt signal for the MCU 1.

In all the operation modes, the remaining amount meter IC 12 outputs a low-temperature notification signal SIG2b from the second notification terminal 12ab when the power supply temperature T_{BAT} satisfies a low temperature condition (a condition of being equal to or lower than the temperature threshold THL2 (-5°C)) (the case where the output value of the power supply thermistor T1 is abnormal). In all the operation modes, the remaining amount meter IC 12 outputs a low-temperature release notification signal SIG2c from the second notification terminal 12ab when the power supply temperature T_{BAT} satisfies a low temperature release condition (a condition of being equal to or higher than the temperature threshold THL1 (0°C)) (a case where the output value of the power supply thermistor T1 is normal). In Fig. 21, the high-temperature notification signal SIG2a, the low-temperature notification signal SIG2b, and the low-temperature release notification signal SIG2c are collectively denoted as a notification signal SIG2. The low-temperature notification signal SIG2b and the low-temperature release notification signal SIG2c are output without waiting for a request from the MCU 1 through the communication line LN. The low-temperature notification signal SIG2b and the low-temperature release notification signal SIG2c may also be referred to as interrupt signals for the MCU 1.

The MCU 1 operating in the sleep mode achieves the energy saving by narrowing down functions thereof to, for example, detection of operation of the operation switch OPS, detection of opening of the slider 119, detection of detachment of the outer panel 115, detection of USB connection, detection of notification from the remaining amount meter IC 12, and execution of protection control based on the notification from the remaining amount meter IC 12.

The MCU 1 operating in the sleep mode being restarted (all functions are enabled) in response to that the slider 119 is opened, and the operation mode of the inhaler 100 being shifted to the active mode are as described above. In addition, in the sleep mode, when the high-temperature notification signal SIG2a is received from the remaining amount meter IC 12 by the terminal P6 (the case where the output value of the power supply thermistor T1 is abnormal), the MCU 1 is also restarted and shifts the operation mode of the inhaler 100 to the active mode.

In addition, in the sleep mode, when the low-temperature notification signal SIG2b is received from the remaining amount meter IC 12 by the terminal P6 (the case where the output value of the power supply thermistor T1 is abnormal), the MCU 1 executes the automatic return protection control and shifts the operation mode of the inhaler 100 to the error mode. After the execution of the automatic return protection control, when the low-temperature release notification signal SIG2c is received by the terminal P6 (the case where the output value of the power supply thermistor T1 is normal), the MCU 1 completes the automatic return protection control and returns to the sleep mode.

When the power supply temperature T_{BAT} satisfies a high temperature condition (a condition of being equal to or higher than the temperature threshold THH3 (60°C)) (the case where the output value of the power supply thermistor T1 is abnormal), the remaining amount meter IC 12 outputs a high-temperature notification signal SIG1 at a low level from the first notification terminal 12aa. When the high-temperature notification signal SIG1 at a low level is output from the first notification terminal 12aa, the CLR( ) terminal of the FF 17 becomes a low level. That is, the output of the Q terminal of the FF 17 becomes a low level, and the manual return protection control is executed. Protection control based on the high-temperature notification signal SIG1 can be executed in all the operation modes.

A resistance value of the voltage divider circuit Pd connected to the non-inverting input terminal of the operational amplifier OP2 is determined such that the output of the operational amplifier OP2 becomes a low level when the temperature of the heater thermistor T3 becomes equal to or higher than the temperature threshold THH0 (340°C) (a case where an output value of the heater thermistor T3 is abnormal). It is in the heating mode that the temperature of the heater thermistor T3 becomes a high temperature close to the temperature threshold THH0 (340°C). Accordingly, in the heating mode, when a low-level signal is output from the operational amplifier OP2, the CLR( ) terminal of the FF 17 becomes a low level. That is, the output of the Q terminal of the FF 17 becomes a low level, and the manual return protection control is executed. It is in an operation mode in which power is supplied to the heater thermistor T3 (in other words, an operation mode other than the sleep mode) that protection control based on the output of the operational amplifier OP2 can be executed.

A resistance value of the voltage divider circuit Pe connected to the non-inverting input terminal of the operational amplifier OP3 is determined such that the output of the operational amplifier OP3 becomes a low level when the temperature of the case thermistor T4 becomes equal to or higher than the temperature threshold THH3 (60 °C) (a case where the output value of the case thermistor T4 is abnormal). When a low-level signal is output from the operational amplifier OP3, the CLR( ) terminal of the FF 17 becomes a low level. That is, the output of the Q terminal of the FF 17 becomes a low level, and the manual return protection control is executed. It is in an operation mode in which power is supplied to the case thermistor T4 (in other words, an operation mode other than the sleep mode) that protection control based on the output of the operational amplifier OP3 can be executed.

As described above, since the FF 17 can execute the protection control without using the MCU 1, even when the MCU 1 achieves the power saving in the sleep mode or the MCU 1 does not operate normally for some reason, the FF 17 can prohibit the charging and discharging based on any of the power supply temperature T_{BAT}, the heater temperature T_{HTR}, and the case temperature T_{CASE}. As a result, the safety of the inhaler 100 can be enhanced.

In the sleep mode, the power supply voltage (system power supply voltage Vcc3) is not supplied to the thermistors T2 to T4. Therefore, the FF 17 cannot prohibit the charging and discharging based on either the heater temperature T_{HTR} or the case temperature T_{CASE}. In contrast, the power supply voltage is supplied to the power supply thermistor T1 in all the operation modes. Therefore, in all the operation modes, the protection control using the FF 17 can be executed.

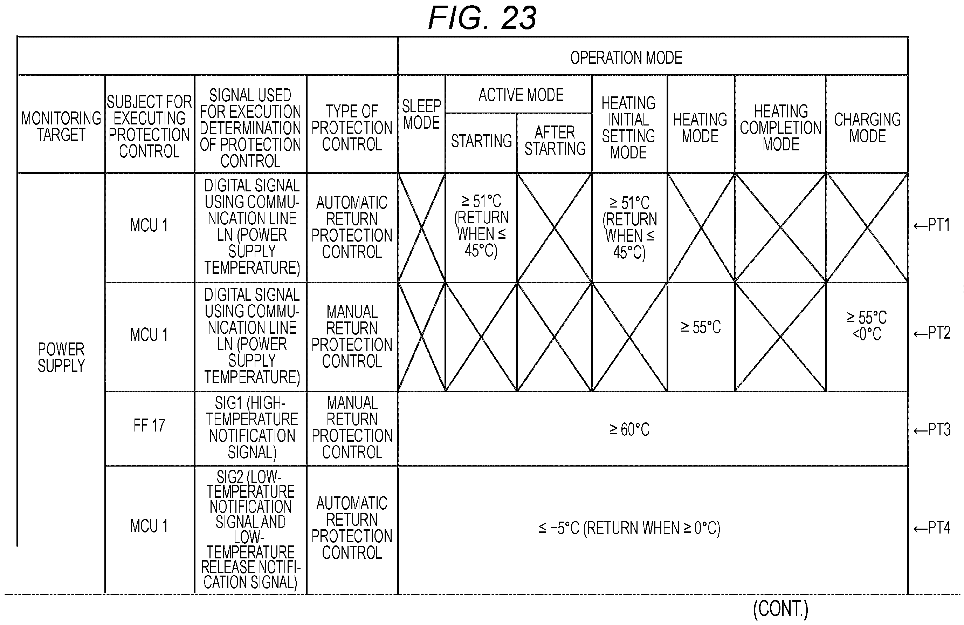

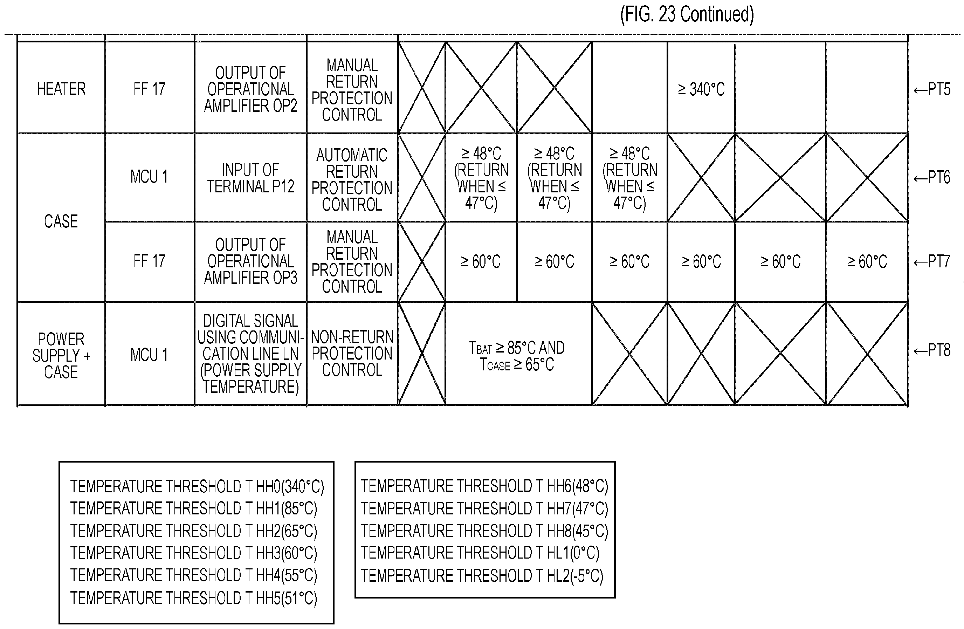

The MCU 1 mainly executes the protection control in an operation mode other than the sleep mode. This will be specifically described below with reference to Fig. 23. Fig. 23 is a diagram illustrating a specific example of a pattern of the protection control executed by the inhaler 100. Fig. 23 also shows a relation between the temperature and the temperature threshold in the drawing for the sake of understanding.

### (Pattern of Protection Control)

As illustrated in Fig. 23, the protection control executed based only on the power supply temperature T_{BAT} includes patterns PT1 to PT4. The protection control executed based only on the heater temperature T_{HTR} includes a pattern PT5. The protection control executed based only on the case temperature T_{CASE} includes a pattern PT6 and a pattern PT7. The protection control executed based on the power supply temperature T_{BAT} and the case temperature T_{CASE} includes a pattern PT8. Hereinafter, each of the patterns will be described.

### (Pattern PT1)

It is the MCU 1 that executes the protection control, and a type of the protection control is the automatic return protection control. The MCU 1 is capable of executing the automatic return protection control in each of a shifting period from the sleep mode to the active mode (a period until a start process for enabling all the functions is completed) and the heating initial setting mode. In each of the shifting period and the heating initial setting mode, the MCU 1 periodically requests, via the communication line LN, the remaining amount meter IC 12 to acquire the power supply temperature T_{BAT}. When the power supply temperature T_{BAT} transmitted from the remaining amount meter IC 12 in response to the acquisition request becomes equal to or higher than the temperature threshold THH5 (51 °C) on a high temperature side, the MCU 1 determines that the output value of the power supply thermistor T1 is abnormal, and executes the automatic return protection control. After the automatic return protection control is executed, when the power supply temperature T_{BAT} transmitted from the remaining amount meter IC 12 becomes equal to or lower than the temperature threshold THH8 (45°C) which is lower than the temperature threshold THH5, the MCU 1 determines that the output value of the power supply thermistor T1 is normal, completes the automatic return protection control, and shifts to the sleep mode.

### (Pattern PT2)

It is the MCU 1 that executes the protection control, and the type of the protection control is the manual return protection control. The MCU 1 can execute the manual return protection control in each of the heating mode and the charging mode. In each of the heating mode and the charging mode, the MCU 1 periodically requests, via the communication line LN, the remaining amount meter IC 12 to acquire the power supply temperature T_{BAT}. When the power supply temperature T_{BAT} transmitted from the remaining amount meter IC 12 becomes equal to or higher than the temperature threshold THH4 (55 °C) on the high temperature side, the MCU 1 operating in the heating mode determines that the output value of the power supply thermistor T1 is abnormal, and executes the manual return protection control. In any of the case where the power supply temperature T_{BAT} transmitted from the remaining amount meter IC 12 becomes equal to or higher than the temperature threshold THH4 (55°C) and a case where the power supply temperature T_{BAT} transmitted from the remaining amount meter IC 12 becomes lower than the temperature threshold THL1 (0°C) on a low temperature side, the MCU 1 operating in the charging mode determines that the output value of the power supply thermistor T1 is abnormal, and executes the manual return protection control.

### (Pattern PT3)

It is the FF 17 that executes the protection control, and the type of the protection control is the manual return protection control. The FF 17 can execute the manual return protection control in all the operation modes. In all the operation modes, when the notification signal SIG1 (a signal indicating that the power supply temperature T_{BAT} is equal to or higher than the temperature threshold THH3 (60°C)) is received from the remaining amount meter IC 12 by the CLR terminal ( ) (the case where the output value of the power supply thermistor T1 is abnormal), the FF 17 executes the manual return protection control.

### (Pattern PT4)

It is the MCU 1 that executes the protection control, and a type of the protection control is the automatic return protection control. The MCU 1 can execute the automatic return protection control in all the operation modes. When the low-temperature notification signal SIG2b is received from the remaining amount meter IC 12 by the terminal P6, the MCU 1 determines that the output value of the power supply thermistor T1 is abnormal, and executes the automatic protection control. After the execution of the automatic return protection control, when the low-temperature release notification signal SIG2c is received by the terminal P6, the MCU 1 determines that the output value of the power supply thermistor T1 is normal, and completes the automatic protection control.

### (Pattern PT5)

It is the FF 17 that executes the protection control, and the type of the protection control is the manual return protection control. The FF 17 can execute the manual return protection control in an operation mode other than the sleep mode. When a low-level signal from the operational amplifier OP2 by the CLR( ) terminal (the case where the output value of the heater thermistor T3 is abnormal) is received, the FF 17 executes the manual return protection control. In an operation mode other than the heating mode, a possibility that the temperature of the heater thermistor T3 approaches the temperature threshold THH0 (340°C) is extremely low. Therefore, Fig. 23 illustrates only the heating mode as the operation mode in which the manual return protection control is executed.

### (Pattern PT6)

It is the MCU 1 that executes the protection control, and a type of the protection control is the automatic return protection control. The MCU 1 can execute the automatic return protection control in the active mode and the heating initial setting mode. When the case temperature T_{CASE} based on the signal input to the terminal P12 (the signal corresponding to the resistance value of the case thermistor T4) is equal to or higher than the temperature threshold THH6 (48 °C), the MCU 1 operating in the operation modes determines that the output value of the case thermistor T4 is abnormal, and executes the automatic return protection control. After the execution of the automatic return protection control, when the case temperature T_{CASE} based on the signal input to the terminal P12 becomes equal to or lower than the temperature threshold THH7 (47°C) which is lower than the temperature threshold THH6, the MCU 1 determines that the output value of the case thermistor T4 is normal, and completes the automatic return protection control.

In the pattern PT6, the protection control cannot be executed in the charging mode and the heating mode, but the protection control may be executed in either of the charging mode and the heating mode.

### (Pattern PT7)

It is the FF 17 that executes the protection control, and the type of the protection control is the manual return protection control. The FF 17 can execute the manual return protection control in an operation mode other than the sleep mode. In the operation modes, when a low-level signal (a signal indicating that the case temperature T_{CASE} is equal to or higher than the temperature threshold THH3 (60°C)) is received from the operational amplifier OP3 by the CLR( ) terminal (a case where the output of the case thermistor T4 is abnormal), the FF 17 executes the manual return protection control.

### (Pattern PT8)

It is the MCU 1 that executes the protection control, and the type of the protection control is the non-return protection control. The non-return protection control can be executed when the high-temperature notification signal SIG2a is output from the remaining amount meter IC 12 in the sleep mode. When the high-temperature notification signal SIG2a is received, the MCU 1 operating in the sleep mode shifts to the active mode, and executes a primary check to determine whether each of the output values of the power supply thermistor T1 and the case thermistor T4 is abnormal. Specifically, when the power supply temperature T_{BAT} transmitted from the remaining amount meter IC 12 via the communication line LN is equal to or higher than the temperature threshold THH1 (85°C) on the high temperature side and the case temperature T_{CASE} based on the signal input to the terminal P12 (the signal corresponding to the resistance value of the case thermistor T4) is equal to or higher than the temperature threshold THH2 (65°C), the MCU 1 determines that each of the output values of the power supply thermistor T1 and the case thermistor T4 is abnormal, and executes the non-return protection control.

The protection control of the pattern PT8 is the non-return protection control, but may be the manual return protection control instead. A situation in which each of the output values of the power supply thermistor T1 and the case thermistor T4 is abnormal is a situation in which it is estimated that an abnormality strongly occurs in the inhaler 100. In such a situation, the safety of the inhaler 100 can be enhanced by preventing the protection control from being automatically completed by the non-return protection control or the manual return protection control.

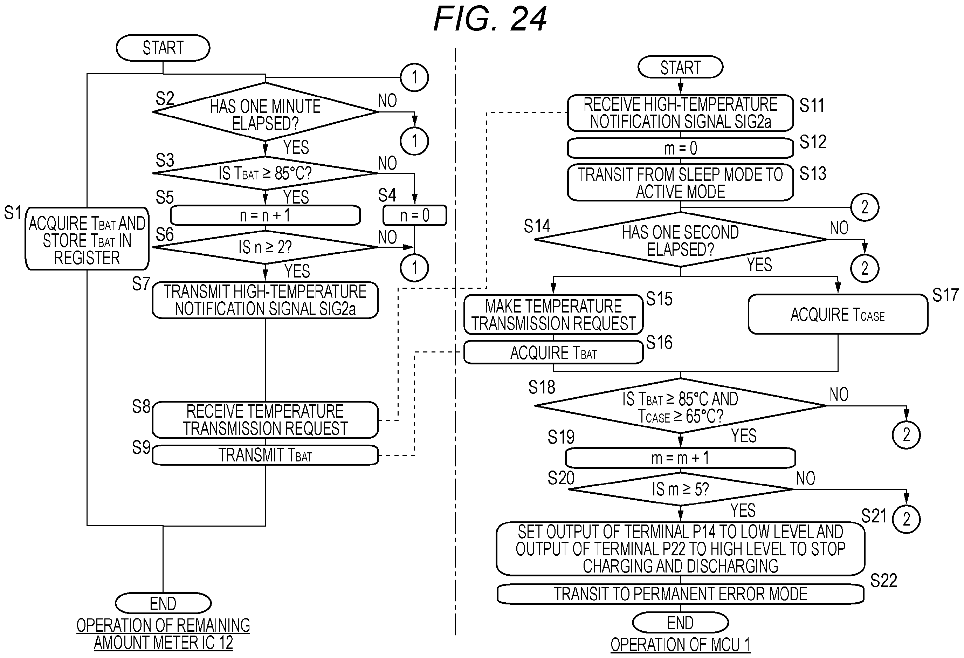

Fig. 24 is a flowchart illustrating an example of operations of the remaining amount meter IC 12 and the MCU 1 when the high-temperature notification signal SIG2a is output from the remaining amount meter IC 12 in a state of the sleep mode.

The remaining amount meter IC 12 acquires the power supply temperature T_{BAT}, for example, at intervals of one second, and stores the power supply temperature T_{BAT} in the built-in register (step S1). In parallel with the process of step S1, the remaining amount meter IC 12 performs an abnormality determination of the power supply temperature T_{BAT} at intervals of, for example, one minute. Specifically, the remaining amount meter IC 12 determines whether one minute has elapsed since the last abnormality determination is performed (step S2). When the determination in step S2 is yes, the remaining amount meter IC 12 determines whether the latest power supply temperature T_{BAT} stored in the built-in register is equal to or higher than the temperature threshold THH1 (85°C) (step S3). When the determination in step S3 is no, the remaining amount meter IC 12 resets a numerical value n of a built-in counter to an initial value of 0 (step S4), and returns the process to step S2.

When the determination in step S3 is yes, the remaining amount meter IC 12 increments the numerical value n of the built-in counter by one (step S5). Thereafter, when the numerical value n is less than 2 (no in step S6), the remaining amount meter IC 12 returns the process to step S2, and when the numerical value n is equal to or more than 2 (yes in step S6), the remaining amount meter IC 12 transmits the high-temperature notification signal SIG2a to the MCU 1 (step S7). A determination threshold (= 2) in step S6 is merely an example, and any natural number of 1 or more may be used.

When the high-temperature notification signal SIG2a transmitted in step S7 is received (step S11), the MCU 1 operating in the sleep mode resets a numerical value m of the built-in counter to the initial value of 0 (step S12), and changes the operation mode to the active mode (step S13). Thereafter, the MCU 1 starts abnormality determination of the power supply temperature T_{BAT} and the case temperature T_{CASE}.

Specifically, when one second has elapsed (yes in step S14), the MCU 1 requests the remaining amount meter IC 12 to transmit the power supply temperature T_{BAT} via the communication line LN (step S15). When the request is received (step S8), the remaining amount meter IC 12 acquires the power supply temperature T_{BAT} and transmits the power supply temperature T_{BAT} to the MCU 1 via the communication line LN (step S9). The MCU 1 receives and acquires the power supply temperature T_{BAT} transmitted from the remaining amount meter IC 12 in step S9 (step S16).

The MCU 1 performs the process of step S17 in parallel with the processes of step S15 and step S16. In step S17, the MCU 1 acquires the case temperature T_{CASE} based on the signal input to the terminal P12. After step S16 and step S17, the MCU 1 determines whether the power supply temperature T_{BAT} acquired in step S16 is equal to or higher than the temperature threshold THH1 (85°C) and the case temperature T_{CASE} acquired in step S17 is equal to or higher than the temperature threshold THH2 (65°C) (step S18).

When the determination in step S18 is no, the MCU 1 returns the process to step S14. Alternatively, when the determination in step S18 is no, the MCU 1 may complete the process. When the determination in step S18 is yes, the MCU 1 increments the numerical value m by one (step S19). Thereafter, the MCU 1 determines whether the numerical value m is equal to or more than 5 (step S20). When the determination in step S20 is no, the MCU 1 returns the process to step S14. When the determination in step S20 is yes, the MCU 1 executes the protection control for prohibiting the charging and discharging by outputting a low-level signal from the terminal P14 and outputting a high-level signal from the terminal P22 (step S21). After step S21, the MCU 1 transits the operation mode to the permanent error mode (step S22). A determination threshold (= 5) in step S20 is merely an example, and any natural number of 1 or more may be used.

As illustrated in Fig. 23, in the inhaler 100, the protection control is executed in a plurality of patterns in which subjects of the protection control are different, types of the protection control are different, types of a signal used for determining execution of the protection control are different, and executable operation modes are different. In this manner, since the protection control can be appropriately executed according to a temperature measurement target and a situation, the safety of the inhaler 100 can be enhanced.

In the above-described embodiment, the protection control of the pattern PT8 is executed in response to the high-temperature notification signal SIG2a output from the remaining amount meter IC 12. Instead of the present embodiment, the protection control of the pattern PT8 may be executed without in response to the high-temperature notification signal SIG2a. That is, after a normal transition from the sleep mode to another mode is made by establishing a connection (USB connection) of an external power supply to the receptacle RCP or opening the slider 119, the MCU 1 may execute the non-return protection control when the power supply temperature T_{BAT} becomes equal to or higher than the temperature threshold THH1 (85°C) on the high temperature side and the case temperature T_{CASE} becomes equal to or higher than the temperature threshold THH2 (65°C). Such protection control of the pattern PT8 is realized by omitting steps S2 to S7 and steps S11 to S13 in the flowchart illustrated in Fig. 24.

### (Preferred Disposition of Case Thermistor T4)

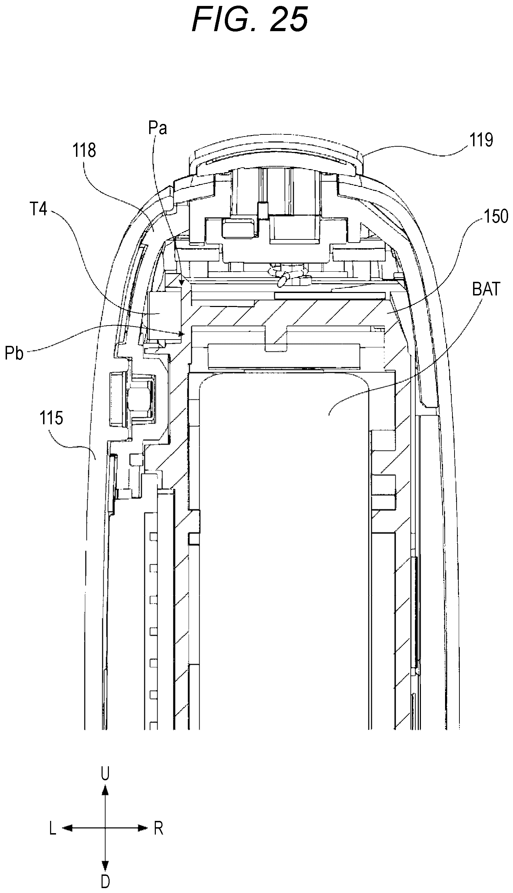

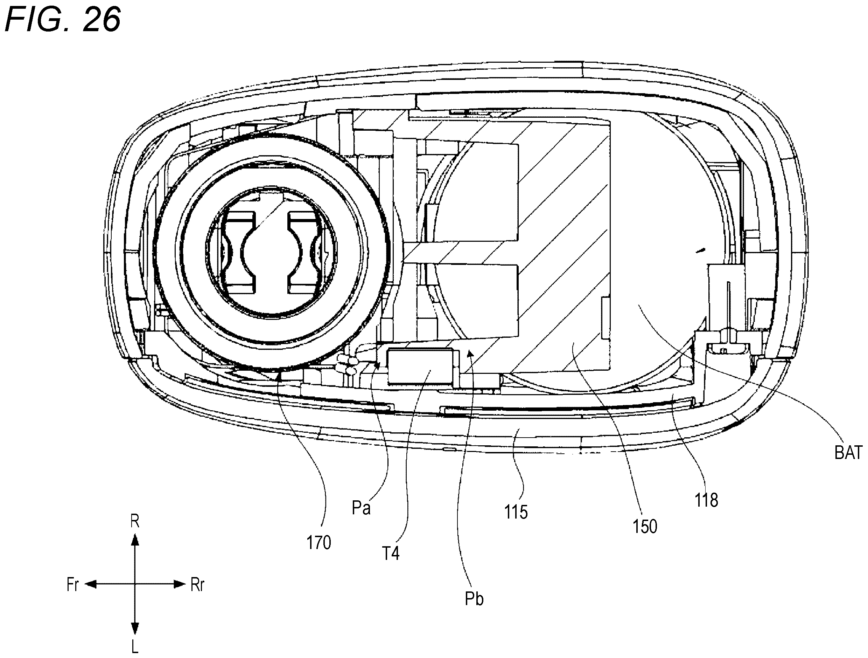

Figs. 25 and 26 are sectional views taken along sections passing through the case thermistor T4 of the inhaler 100 illustrated in Fig. 1. Fig. 25 is a sectional view taken along a section perpendicular to the front-rear direction. Fig. 26 is a sectional view taken along a section perpendicular to the up-down direction.

The power supply BAT, the case thermistor T4, and the heating unit 170 including the heater HTR are fixed to the chassis 150 inside the case 110. As illustrated in Fig. 26, the heating unit 170 and the power supply BAT are disposed side by side in the front-rear direction, and the case thermistor T4 is fixed to the chassis 150 so as to be located between the heating unit 170 and the power supply BAT in the front-rear direction. As illustrated in Figs. 25 and 26, the chassis 150 includes a portion Pb located between the power supply BAT and the case thermistor T4 and a portion Pa located between the heating unit 170 and the case thermistor T4.

In this manner, a position of the case thermistor T4 is fixed by the chassis 150 used for fixing another electronic component. Therefore, the case thermistor T4 can accurately acquire the temperature of the case 110 while avoiding an increase in manufacturing cost of the inhaler 100. In addition, as illustrated in Fig. 26, since the case thermistor T4 is not located at an end in the front-rear direction, heat of a hand of the user when the user holds the case 110 hardly affects the case thermistor T4. Further, since the portion Pa and the portion Pb are present, heat generated by the power supply BAT and the heater HTR is less likely to be transferred to the case thermistor T4. Therefore, an environment where the inhaler 100 is placed can be more accurately grasped based on the output value of the case thermistor T4.

Even when one of the portion Pa and the portion Pb of the chassis 150 is omitted, an effect that the heat generated by the power supply BAT and the heater HTR is less likely to be transferred to the case thermistor T4 can be obtained due to the presence of the other of the portion Pa and the portion Pb.

Although various embodiments have been described above with reference to the drawings, it is needless to say that the present invention is not limited to these examples. It is apparent to those skilled in the art that various changes and modifications may be conceived within the scope described in the claims, and it is understood that the changes and the modifications naturally fall within the technical scope of the present invention.

In the present description, at least the following matters are described. Corresponding constituent components and the like in the above-mentioned embodiment are shown in parentheses, but the present invention is not limited thereto.
(1) A power supply unit (inhaler 100) for an aerosol generating device, including:
   a power supply (power supply BAT);
   a heater connector (heater connector Cn) connected to a heater (heater HTR) configured to heat an aerosol source by consuming power supplied from the power supply;
   a case (case 110) which constitutes a surface of the power supply unit; and
   a sensor (case thermistor T4) which is disposed in the vicinity of the case and is configured to output a value related to a temperature of the case, in which
   protection control (protection control of pattern PT6 and pattern PT7 in Fig. 23) for prohibiting one or both of charging of the power supply and discharging from the power supply to the heater is executed based on an output value of the sensor.

When the power supply unit of an aerosol generating device is placed in an unrecommended environment such as a high-temperature environment, a temperature of the case shows an abnormal value. According to (1), at least one of the charging of the power supply and the discharging of the power supply to the heater (hereinafter, described as at least one of the charging and the discharging) can be prohibited based on a value related to the temperature of the case. Therefore, safety of the aerosol generating device can be enhanced.

(2) The power supply unit for an aerosol generating device according to (1), in which
the protection control can be completed.

According to (2), at least one of the charging and the discharging is temporarily prohibited based on the value related to the temperature of the case. For example, even when the protection control is executed, when a situation of the aerosol generating device is improved, at least one of the charging and the discharging is possible by completing the protection control. Therefore, the aerosol generating device can be used again in a state where the safety is ensured, and satisfaction of the user is improved.

(3) The power supply unit for an aerosol generating device according to (2), further including:
a controller (MCU 1) configured to control supply of power from the power supply to the heater, in which:
the controller is configured to:
acquire the temperature of the case (case temperature T_{CASE}) based on the output value of the sensor,
execute the protection control (protection control of pattern PT6 in Fig. 23) when the temperature of the case is equal to or higher than a first threshold (temperature threshold THH6: 48°C); and
complete the protection control when the temperature of the case is equal to or lower than a second threshold (temperature threshold THH7: 47°C) which is lower than the first threshold.

According to (3), as long as the temperature of the case does not decrease to a temperature lower than a temperature at which at least one of the charging and the discharging is prohibited, at least one of the charging and the discharging is not permitted. Therefore, a matter that the protection control is executed again immediately after at least one of the charging and the discharging is possible and at least one of the charging and the discharging is prohibited is avoided, and usability of the aerosol generating device is improved.

(4) The power supply unit for an aerosol generating device according to (3), in which
the controller is configured to complete the protection control when the temperature of the case becomes equal to or lower than the second threshold.

According to (4), since an operation of the user is not required to complete the execution of the protection control, convenience of the aerosol generating device is improved.

(5) The power supply unit for an aerosol generating device according to (1), in which:
the protection control includes first protection control (protection control of pattern PT6 in Fig. 23) capable of being completed and second protection control (protection control of pattern PT7 in Fig. 23) capable of being completed with more operations performed by a user for completion than the first protection control;
the first protection control is executed when the output value is a value indicating that the temperature of the case is equal to or higher than a first threshold (temperature threshold THH6: 48°C); and
the second protection control is executed when the output value is a value indicating that the temperature of the case is equal to or higher than a second threshold (temperature threshold THH3: 60°C) which is higher than the first threshold.

According to (5), the temperature of the case can be prevented from becoming equal to or higher than the second threshold by executing the first protection control, and when the temperature of the case becomes equal to or higher than the second threshold due to some abnormality, the second protection control is executed. Since the second protection control requires more operations for completion than the first protection control, the second protection control cannot be simply completed. Therefore, the safety of the aerosol generating device is improved.

(6) The power supply unit for an aerosol generating device according to (5), in which:
operation is possible in a plurality of modes; and
the number of modes (active mode, heating initial setting mode, heating mode, heating completion mode, and charging mode) in which the second protection control (protection control of pattern PT7 in Fig. 23) is executable among the plurality of modes is larger than the number of modes (active mode and heating initial setting mode) in which the first protection control (protection control of pattern PT6 in Fig. 23) is executable among the plurality of modes.

According to (6), since the second protection control executed when the temperature of the case is higher can be executed in more modes, protection by the second protection control can be made stronger while reducing the number of modes in which the first protection control can be executed. Meanwhile, since the number of modes in which the first protection control can be executed is small, power consumed to determine whether to execute the first protection control can be reduced.

(7) The power supply unit for an aerosol generating device according to (5) or (6), further including:
an MCU (MCU 1) configured to control supply of power from the power supply to the heater, in which:
the first protection control (protection control of pattern PT6 in Fig. 23) is executed by the MCU; and
the second protection control (protection control of pattern PT7 in Fig. 23) is executed without using the MCU.

In a situation in which the temperature of the case reaches the second threshold that is higher than the first threshold, the MCU may not operate normally. According to (7), even in such a situation, the second protection control can be executed without using the MCU. Therefore, a circumstance in which the second protection control cannot be executed in a situation in which the second protection control should be executed can be avoided, and the safety of the aerosol generating device can be enhanced.

(8) The power supply unit for an aerosol generating device according to any of (5) to (7), in which:
operation is possible in a plurality of modes;
the plurality of modes include a charging mode for charging the power supply and a heating mode for discharging from the power supply to the heater; and
the first protection control (protection control of pattern PT6 in Fig. 23) is not executed in one or both of the charging mode and the heating mode.

In the charging mode and the heating mode, electronic components including the power supply inside the power supply unit are likely to generate heat. In such a mode, the temperature of the case hardly reflects an environment where the power supply unit is placed. According to (8), the first protection control is not executed in the charging mode and the heating mode. Therefore, at least one of the charging and the discharging is less likely to stop, and the convenience of the aerosol generating device is improved. On the other hand, the second protection control is executed when the temperature of the case becomes equal to or higher than the second threshold that is higher than the first threshold, so that the safety is ensured.

(9) The power supply unit for an aerosol generating device according to (8), in which
the first protection control (protection control of pattern PT6 in Fig. 23) is not executed in both the charging mode and the heating mode.

According to (9), since the first protection control is not executed in the charging mode and the heating mode, at least one of the charging and the discharging is less likely to stop, and the convenience of the aerosol generating device is improved.

(10) The power supply unit for an aerosol generating device according to (8), in which:
the plurality of modes include a sleep mode and a pre-heating mode (active mode and heating initial setting mode) required to be performed for transition from the sleep mode to the heating mode; and
the first protection control (protection control of pattern PT6 in Fig. 23) is executable in the pre-heating mode.

According to (10), it is possible to determine whether the aerosol generating device is in a safe situation before generating aerosol. Therefore, the aerosol can be generated in an appropriate (recommended) environment.

(11) The power supply unit for an aerosol generating device according to (10), in which
the first protection control (protection control of pattern PT6 in Fig. 23) is executable only in the pre-heating mode.

According to (11), it is possible to generate the aerosol in the appropriate (recommended) environment while reducing power consumed for determining whether to execute the first protection control.

(12) The power supply unit for an aerosol generating device according to any of (1) to (11), further including:
the heater; and
a chassis (chassis 150) configured to fix the power supply, the heater, and the sensor.

According to (12), a position of the sensor is also fixed by the chassis used for fixing an electronic component different from the sensor. Therefore, the sensor can accurately acquire the temperature of the case while avoiding an increase in manufacturing cost of the power supply unit.

(13) The power supply unit for an aerosol generating device according to (12), in which:
the heater and the power supply are disposed side by side in a first direction (front-rear direction); and
the sensor is fixed to the chassis to be located between the heater and the power supply in the first direction.

According to (13), since the sensor is not located at an end in the first direction, heat of a hand of the user when the user holds the case hardly affects the sensor. Therefore, an environment where the aerosol generating device is placed can be more accurately grasped based on the output value of the sensor

(14) The power supply unit for an aerosol generating device according to (12) or (13), in which
the chassis includes one or both of a portion (portion Pb) located between the power supply and the sensor and a portion (portion Pa) located between the heater and the sensor

According to (14), heat generated by the power supply and the heater is less likely to be transferred to the sensor through the chassis. Therefore, an environment where the aerosol generating device is placed can be more accurately grasped based on the output value of the sensor.

Although various embodiments have been described above with reference to the drawings, it is needless to say that the present invention is not limited to these examples. It is apparent to those skilled in the art that various changes and modifications may be conceived within the scope described in the claims, and it is understood that the changes and the modifications naturally fall within the technical scope of the present invention. In addition, the components described in the above embodiments may be optionally combined without departing from the spirit of the invention.

The present application is based on the Japanese patent application (Japanese Patent Application No. 2021-079903) filed on May 10, 2021, and contents thereof are incorporated herein by reference.

### REFERENCE SIGNS LIST

100: inhaler
110: case
119: slider
150: chassis
170: heating unit
1: MCU
2: charging IC
9: step-up DC/DC converter
12: remaining amount meter IC
17: flip-flop
HTR: heater
BAT: power supply
Cn: heater connector
T1: power supply thermistor
T2: puff thermistor
T3: heater thermistor
T4: case thermistor
Ch, Cu, Ct2, Ct3, Ct4: capacitor
Nt1, Nt2, Nt3, Nt4, Nu, Nb: node
OPS: operation switch
PT1 to PT8: pattern

## Claims

1. A power supply unit for an aerosol generating device, comprising:
a power supply;
a heater connector connected to a heater configured to heat an aerosol source by consuming power supplied from the power supply;
a case which constitutes a surface of the power supply unit; and
a sensor which is disposed in the vicinity of the case and is configured to output a value related to a temperature of the case, wherein
protection control for prohibiting one or both of charging of the power supply and discharging from the power supply to the heater is executed based on an output value of the sensor.

2. The power supply unit for an aerosol generating device according to claim 1, wherein
the protection control can be completed.

3. The power supply unit for an aerosol generating device according to claim 2, further comprising:
a controller configured to control supply of power from the power supply to the heater, wherein:
the controller is configured to:
acquire the temperature of the case based on the output value of the sensor,
execute the protection control when the temperature of the case is equal to or higher than a first threshold; and
complete the protection control when the temperature of the case is equal to or lower than a second threshold which is lower than the first threshold.

4. The power supply unit for an aerosol generating device according to claim 3, wherein
the controller is configured to complete the protection control when the temperature of the case becomes equal to or lower than the second threshold.

5. The power supply unit for an aerosol generating device according to claim 1, wherein:
the protection control includes first protection control capable of being completed and second protection control capable of being completed with more operations performed by a user for completion than the first protection control;
the first protection control is executed when the output value is a value indicating that the temperature of the case is equal to or higher than a first threshold; and
the second protection control is executed when the output value is a value indicating that the temperature of the case is equal to or higher than a second threshold which is higher than the first threshold.

6. The power supply unit for an aerosol generating device according to claim 5, wherein:
operation is possible in a plurality of modes; and
the number of modes in which the second protection control is executable among the plurality of modes is larger than the number of modes in which the first protection control is executable among the plurality of modes.

7. The power supply unit for an aerosol generating device according to claim 5 or 6, further comprising:
an MCU configured to control supply of power from the power supply to the heater, wherein:
the first protection control is executed by the MCU; and
the second protection control is executed without using the MCU.

8. The power supply unit for an aerosol generating device according to any of claims 5 to 7, wherein:
operation is possible in a plurality of modes;
the plurality of modes include a charging mode for charging the power supply and a heating mode for discharging from the power supply to the heater; and
the first protection control is not executed in one or both of the charging mode and the heating mode.

9. The power supply unit for an aerosol generating device according to claim 8, wherein
the first protection control is not executed in both the charging mode and the heating mode.

10. The power supply unit for an aerosol generating device according to claim 8, wherein:
the plurality of modes include a sleep mode and a pre-heating mode required to be performed for transition from the sleep mode to the heating mode; and
the first protection control is executable in the pre-heating mode.

11. The power supply unit for an aerosol generating device according to claim 10, wherein
the first protection control is executable only in the pre-heating mode.

12. The power supply unit for an aerosol generating device according to any of claims 1 to 11, further comprising:
the heater; and
a chassis configured to fix the power supply, the heater, and the sensor.

13. The power supply unit for an aerosol generating device according to claim 12, wherein:
the heater and the power supply are disposed side by side in a first direction; and
the sensor is fixed to the chassis to be located between the heater and the power supply in the first direction.

14. The power supply unit for an aerosol generating device according to claim 12 or 13, wherein
the chassis includes one or both of a portion located between the power supply and the sensor and a portion located between the heater and the sensor.
